(19) Europäisches Patentamt / European Patent Office / Office européen des brevets

(11) **EP 3 902 687 B1**

(12) **FASCICULE DE BREVET EUROPEEN**

(45) Date de publication et mention de la délivrance du brevet:
**28.09.2022 Bulletin 2022/39**

(21) Numéro de dépôt: **19853287.1**

(22) Date de dépôt: **24.12.2019**

(51) Classification Internationale des Brevets (IPC):
**B60C 3/08** *(2006.01)*    **B60C 7/12** *(2006.01)*
**B60C 7/14** *(2006.01)*    **B60C 9/02** *(2006.01)*
**B60C 3/02** *(2006.01)*

(52) Classification Coopérative des Brevets (CPC):
**B60C 9/02; B60C 3/02; B60C 7/125; B60C 7/14; B60C 7/146**

(86) Numéro de dépôt international:
**PCT/FR2019/053296**

(87) Numéro de publication internationale:
**WO 2020/136354 (02.07.2020 Gazette 2020/27)**

(54) **ASSEMBLAGE POUR UN PNEUMATIQUE, PNEUMATIQUE ET PROCÉDÉS DE FABRICATION ASSOCIÉS**

ANORDNUNG FÜR EINEN REIFEN, REIFEN UND ZUGEHÖRIGE HERSTELLUNGSVERFAHREN

ASSEMBLY FOR A TYRE, TYRE AND ASSOCIATED MANUFACTURING METHODS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.12.2018 FR 1874106**

(43) Date de publication de la demande:
**03.11.2021 Bulletin 2021/44**

(73) Titulaire: **COMPAGNIE GENERALE DES ETABLISSEMENTS MICHELIN**
**63000 Clermont-Ferrand (FR)**

(72) Inventeurs:
• **BROUSSEAU, Magaly**
  **63040 CLERMONT FERRAND CEDEX 9 (FR)**
• **LIMOZIN, Bastien**
  **63040 CLERMONT FERRAND CEDEX 9 (FR)**
• **RIGO, Sébastien**
  **63040 CLERMONT FERRAND CEDEX 9 (FR)**

(74) Mandataire: **Louret, Sylvain**
**M.F.P. MICHELIN**
**Service juridique - Propriété Intellectuelle**
**DCJ/PI - F35 - Site de Ladoux**
**23, place des Carmes - Déchaux**
**63040 Clermont-Ferrand Cedex 9 (FR)**

(56) Documents cités:
**EP-A1- 3 231 637    WO-A1-2017/103490**
**FR-A1- 3 061 674**

**Description**

**DOMAINE DE L'INVENTION**

L'invention concerne de manière générale le domaine des pneumatiques pour un véhicule, typiquement un véhicule de tourisme, à deux roues, poids lourd, agricole, de génie civil ou un avion ou, plus généralement, pour tout dispositif roulant. Plus précisément, l'invention concerne la mise à plat d'un tel pneumatique.

**ARRIERE-PLAN TECHNOLOGIQUE**

Un pneumatique 4 est une structure torique destinée à être montée sur une jante, pressurisée par un gaz de gonflage et écrasée sur un sol sous l'action d'une charge.

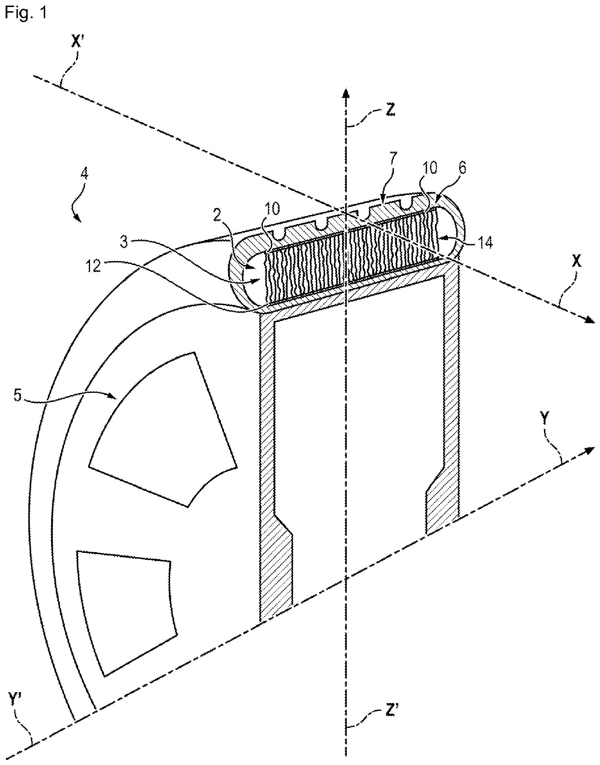

Comme visible sur la figure 1 qui illustre un exemple de pneumatique 4, un pneumatique 4 présente une surface de roulement, (c'est-à-dire une surface destinée à entrer en contact avec un sol), un plan de roulement (c'est-à-dire un plan normal à l'axe de révolution Y-Y' et qui intersecte la surface de roulement), un axe circonférentiel X-X' (qui correspond à un axe du plan de roulement qui est tangent à la surface de roulement) et un axe radial Z-Z' (qui correspond à un axe transversal à l'axe de révolution Y-Y' du pneumatique 4 et qui intersecte l'axe de révolution Y-Y').

De manière connue en soi, le pneumatique 4 comprend, de l'axe de révolution Y-Y' vers sa surface de roulement, une carcasse 3, un sommet agencé radialement à l'extérieur de la carcasse 3 et une bande de roulement 7.

La carcasse 3 est une structure de révolution comprenant une nappe de carcasse comportant des éléments de renfort de carcasse. Les éléments de renfort de carcasse sont sensiblement parallèles les uns aux autres selon une direction donnée et forment un angle supérieur ou égal à 65°, de préférence supérieur ou égal à 80° et ici plus préférentiellement sensiblement égal à 90° avec l'axe circonférentiel X-X' du pneumatique 4. Les éléments de renfort de carcasse peuvent notamment comprendre des éléments de renfort filaires textiles, par exemple comprenant deux brins de polyester de 144 tex enroulés à 290 tours ensemble.

Le sommet 6 est une structure de révolution agencée radialement à l'extérieur de la carcasse 3 et comprend deux nappes de travail et une nappe de frettage.

Chaque nappe de travail comprend des éléments de renfort de travail. Les éléments de renfort de travail sont sensiblement parallèles les uns aux autres selon une direction et forment un angle allant de 15° et 40°, de préférence allant de 20° à 30° avec l'axe circonférentiel du pneumatique 4 et ici égal à 26°. Les éléments de renfort de travail sont croisés d'une nappe de travail par rapport à l'autre. Ils peuvent notamment comprendre des éléments de renfort filaires métalliques, par exemple des câbles de structure 2 x 0.30 mm.

La nappe de frettage est agencée radialement à l'extérieur des nappes de travail et comprend des éléments de renfort filaires de frettage sensiblement parallèles les uns aux autres formant un angle au plus égal à 10°, de préférence allant de 5° à 10° avec la direction circonférentielle du pneumatique 4 et ici égal à 5°. Les éléments de renfort de frettage peuvent comprendre des éléments de renfort filaires textiles, par exemple comprenant deux brins d'aramide de 167 tex enroulés à 315 tours ensemble.

La bande de roulement 7 est agencée radialement à l'extérieur du sommet 6 et est destinée à entrer en contact avec un sol. La surface de roulement correspond donc à tout ou partie de la face radialement externe de la bande de roulement 7.

La nappe de carcasse, les nappes de travail et la nappe de frettage sont réalisées dans une ou plusieurs compositions polymériques, par exemple des compositions élastomériques comprenant au moins un élastomère, de préférence diénique, par exemple du caoutchouc naturel, dans laquelle sont noyés les éléments de renfort correspondants.

La bande de roulement 7 est réalisée dans une composition polymérique, par exemple une composition élastomérique comprenant au moins un élastomère, de préférence diénique, par exemple du caoutchouc naturel. Afin d'améliorer la mise à plat du pneumatique 4, il a été proposé un assemblage comprenant une première structure formée de premiers éléments filaires, une deuxième structure formée de deuxièmes éléments filaires et une structure porteuse comprenant des éléments filaires porteurs reliant la première structure et la deuxième structure. La première structure et la deuxième structure peuvent être enduites ou imprégnées avec une composition élastomérique, typiquement du caoutchouc, par exemple par calandrage.

Cet assemblage peut par exemple être formé d'un tissu tridimensionnel ou d'un tricot tridimensionnel. On pourra notamment se référer aux documents WO2017/103490 et WO 2017/103491, au nom de la Demanderesse, qui décrivent des exemples d'assemblages et leurs procédés de fabrication. Un tel assemblage permet d'améliorer significativement la mise à plat de la bande de roulement 7 lorsque le pneumatique 4 est soumis à une charge. Toutefois, la Demanderesse s'est aperçue du fait que la mise à plat de la bande de roulement 7 était encore améliorée lorsque la structure supérieure et la structure inférieure de l'assemblage étaient parfaitement alignées dans le pneumatique 4. Or il arrive fréquemment, lors de la manutention de l'assemblage, que l'une des structures glisse par rapport à l'autre, la structure porteuse n'étant alors pas tendue et ne pouvant donc empêcher leur mouvement relatif.

Afin d'empêcher ce glissement relatif, le document WO2017/103490 enseigne l'utilisation de moyens sacrificiels pour fixer la structure supérieure sur la structure inférieure lors de la manutention de l'assemblage. En particulier, les moyens sacrificiels permettent de garantir le positionnement correct des deux structures jusqu'à leur pose sur le tambour de confection. Pour cela, les moyens sacrificiels sont dimensionnés de sorte à rompre lorsque la structure supérieure et la structure inférieure sont écartées l'une de l'autre, par exemple au moment du galbage du pneumatique. Toutefois, la Demanderesse s'est aperçue du fait qu'il pouvait être difficile de dimensionner correctement ces moyens sacrificiels afin de garantir à la fois le maintien en position des structures supérieure et inférieure lors de la manutention et leur rupture au moment du galbage. Or, lorsque les moyens sacrificiels ne rompent pas lors du galbage, cela a pour conséquence de ralentir la fabrication de l'assemblage. A contrario, lorsque tout ou partie des moyens sacrificiels rompent pendant la manutention de l'assemblage, et donc avant le galbage, la première structure et la deuxième structure se désalignent, détériorant ainsi la mise à plat de la bande de roulement 7. La rupture des moyens sacrificiels n'étant en outre pas homogène dans l'ensemble, elle crée en outre des inhomogénéités structurelles qui détériorent les performances du pneumatique. Enfin, une contrainte supplémentaire à prendre en compte est que les moyens sacrificiels doivent être capables de supporter les températures d'encollage, qui peuvent dépasser 200°C. Il en découle que l'utilisation de moyens sacrificiels ne permet donc pas de garantir l'alignement des structures, sauf à les dimensionner précisément à chaque nouvel assemblage, ce qui est coûteux et difficilement envisageable à l'échelle industrielle.

## RESUME DE L'INVENTION

Un objectif de l'invention est de proposer un nouvel assemblage, un procédé de fabrication associé ainsi qu'un pneumatique associé qui permettent de s'affranchir des difficultés d'alignement de la première et de la deuxième structure de l'assemblage de manière simple, efficace et peu coûteuse sans pour autant ralentir la fabrication de l'assemblage et du pneumatique, et qui permette de garantir l'obtention d'un pneumatique dont la mise à plat de la bande de roulement est nettement améliorée.

Pour cela, l'invention propose un assemblage pour un pneumatique comprenant :

- une première structure formée de premiers éléments filaires, la première structure présentant un bord longitudinal s'étendant suivant une première direction qui définit un premier axe,
- une deuxième structure formée de deuxièmes éléments filaires, la deuxième structure comprenant un bord longitudinal s'étendant suivant une deuxième direction qui définit un deuxième axe, le premier axe et le deuxième axe étant parallèles,
- une structure porteuse comprenant des éléments filaires porteurs reliant les premiers éléments filaires de la première structure et les deuxièmes éléments filaires de la deuxième structure, et
- au moins un élément de solidarisation filaire fixé aux premiers éléments filaires et aux deuxièmes éléments filaires,

l'assemblage étant caractérisé en ce que l'au moins un élément de solidarisation comprend un élément filaire guipé comportant une âme autour de laquelle est enroulée une guipe, dans lequel :

- l'âme de l'élément de solidarisation présente un allongement avant rupture inférieur au rapport $A_1$ entre une hauteur de conformation de l'assemblage et la somme d'une épaisseur de la première structure, d'une épaisseur de la deuxième structure et d'une longueur d'embarrage :

$$A_{rupture\_âme} < A_1 = h / (E + e_1 + e_2)$$

où : $A_{rupture\_âme}$ est l'allongement avant rupture de l'âme h est la hauteur de conformation de l'assemblage, correspondant à une hauteur entre des faces en regard de la première structure et de la deuxième structure lorsque les éléments filaires porteurs sont tendus
$e_1$ est l'épaisseur de la première structure
$e_2$ est l'épaisseur de la deuxième structure
E est la longueur d'embarrage et

- la guipe de l'élément de solidarisation présente un allongement avant rupture supérieur à un allongement égal audit rapport $A_1$ entre la hauteur de conformation de l'assemblage et la somme de l'épaisseur de la première structure, de l'épaisseur de la deuxième structure et de la longueur d'embarrage :

$$A_{rupture\_guipe} > A_1 = h / (E + e_1 + e_2)$$

où : $A_{rupture\_quipe}$ est l'allongement avant rupture de l'âme.

Certaines caractéristiques préférées mais non limitatives de l'assemblage décrit ci-dessus sont les suivantes, prises individuellement ou en combinaison :

- l'élément de solidarisation présente une première rigidité sécante et l'âme présente un premier allongement avant rupture, la guipe présente une deuxième rigidité sécante et un deuxième allongement avant rupture, la première rigidité sécante de l'élément de solidarisation étant strictement supérieure à la deuxième rigidité sécante de la guipe, le premier allongement avant rupture de l'âme étant strictement inférieur au deuxième allongement avant rupture de la guipe.
- l'au moins un élément de solidarisation présente deux extrémités libres opposées et est ancré aux premiers éléments filaires et aux deuxièmes éléments filaires au niveau de ses extrémités libres et est embarré dans la première et dans la deuxième structure entre ses extrémités libres.
- l'au moins un élément de solidarisation présente deux extrémités libres opposées et est ancré aux premiers éléments filaires et aux deuxièmes éléments filaires au niveau de ses extrémités libres et en plusieurs points entre ses extrémités libres, et dans lequel l'allongement avant rupture de l'âme $A_{rupture\_âme}$ est inférieur au rapport $A_2$ entre une hauteur de conformation de l'assemblage et la somme de l'épaisseur de la première structure, et de l'épaisseur de la deuxième structure $A_{rupture\_âme} < A_2 = h / (e_1 + e_2)$, l'allongement avant rupture de la guipe $A_{rupture\_guipe}$ étant supérieur audit rapport $A_2$ entre une hauteur de conformation de l'assemblage et la somme de l'épaisseur de la première structure, et de l'épaisseur de la deuxième structure : $A_{rupture\_guipe} > A_2 = h / (e_1 + e_2)$.

une rigidité sécante de la guipe de l'élément de solidarisation est inférieure ou égale à une rigidité maximale qui correspond au rapport entre une force subie par la guipe de l'élément de solidarisation lors de l'application d'une pression de galbage prédéterminée de sorte à former un espace séparant la première structure et la deuxième structure l'une de l'autre, et son allongement à cette pression de galbage : $E_{max} = F_{guipe} / A$, où : $F_{guipe}$ correspond à la force subie par la guipe de l'au moins un élément de solidarisation à la pression de galbage prédéterminée, A correspond à l'allongement de l'élément de solidarisation à cette pression de galbage. une rigidité sécante de l'élément de solidarisation est supérieure ou égale à une rigidité minimale qui correspond au rapport d'une force subie par l'élément de solidarisation sous une tension d'enroulage prédéterminée et de l'allongement que doit être capable de subir l'élément de solidarisation sous cette même tension d'enroulage : $E_{min} = F_{T\_renfort}/A_T$, où : $F_{T\_renfort}$ correspond à la force subie par l'élément de solidarisation sous la tension d'enroulage T, $A_T$ correspond à l'allongement que doit être capable de subir l'élément de solidarisation sous cette même tension d'enroulage.

Selon un deuxième aspect, l'invention propose un procédé de fabrication d'un assemblage comme décrit ci-dessus, ledit procédé de fabrication comprenant les étapes suivantes :

- placer la première structure sur la deuxième structure de sorte que le premier axe et le deuxième axe sont sensiblement parallèles, et

  fixer la première structure sur la deuxième structure en fixant au moins un élément de solidarisation aux premiers éléments filaires et aux deuxièmes éléments filaires,
  le procédé de fabrication étant caractérisé en ce que l'au moins un élément de solidarisation comprend un élément filaire guipé comportant une âme autour de laquelle est enroulée une guipe et dans lequel :

  - l'âme de l'élément de solidarisation présente un allongement avant rupture inférieur au rapport $A_1$ entre une hauteur de conformation de l'assemblage et la somme d'une épaisseur de la première structure, d'une épaisseur de la deuxième structure et d'une longueur d'embarrage :

$$A_{rupture\_âme} < A_1 = h / (E + e_1 + e_2)$$

où : $A_{rupture\_âme}$ est l'allongement avant rupture de l'âme h est la hauteur de conformation de l'assemblage, correspondant à une hauteur entre des faces en regard de la première structure et de la deuxième structure lorsque les éléments filaires porteurs sont tendus
$e_1$ est l'épaisseur de la première structure
$e_2$ est l'épaisseur de la deuxième structure

E est la longueur d'embarrage et

- la guipe de l'élément de solidarisation présente un allongement avant rupture supérieur à un allongement égal audit rapport $A_1$ entre la hauteur de conformation de l'assemblage et la somme de l'épaisseur de la première structure, de l'épaisseur de la deuxième structure et de la longueur d'embarrage :

$$A_{rupture\_guipe} > A_{1 =} h / (E + e_1 + e_2)$$

où : $A_{rupture\_quipe}$ est l'allongement avant rupture de l'âme.

Certaines caractéristiques préférées mais non limitatives du procédé de fabrication décrit ci-dessus sont les suivantes, prises individuellement ou en combinaison :

- l'élément de solidarisation présente une première rigidité sécante et l'âme présente un premier allongement avant rupture, la guipe présente une deuxième rigidité sécante et un deuxième allongement avant rupture, la première rigidité sécante de l'élément de solidarisation étant strictement supérieure à la deuxième rigidité sécante de la guipe, le premier allongement avant rupture de l'âme étant strictement inférieur au deuxième allongement avant rupture de la guipe.
- l'au moins un élément de solidarisation présente deux extrémités libres opposées, l'étape de fixation comprenant les sous-étapes d'ancrage dudit au moins un élément de solidarisation aux premiers éléments filaires et aux deuxièmes éléments filaires au niveau de ses extrémités libres et d'embarrage dudit élément de solidarisation dans la première et dans la deuxième structure entre ses extrémités libres.
- l'au moins un élément de solidarisation présente deux extrémités libres opposées, l'étape de fixation étant réalisée par ancrage dudit au moins un élément de solidarisation aux premiers éléments filaires et aux deuxièmes éléments filaires au niveau de ses extrémités libres et en plusieurs points entre ses extrémités libres, l'élément de solidarisation étant dimensionné de sorte que l'allongement avant rupture de l'âme $A_{rupture\_âme}$ est inférieur au rapport $A_2$ entre une hauteur de conformation de l'assemblage et la somme de l'épaisseur de la première structure, et de l'épaisseur de la deuxième structure : $A_{rupture\_âme} < A_2 = h / (e_1 + e_2)$, l'allongement avant rupture de la guipe $A_{rupture\_guipe}$ étant supérieur audit rapport $A_2$ entre une hauteur de conformation de l'assemblage et la somme de l'épaisseur de la première structure, et de l'épaisseur de la deuxième structure : $A_{rupture\_guipe} > A_2 = h / (e_1 + e_2)$.
- la première structure et la deuxième structure sont configurées pour être écartées par application d'une pression de galbage prédéterminée de sorte à former un espace séparant la première structure et la deuxième structure l'une de l'autre, et la guipe de l'au moins un élément de solidarisation est dimensionnée de sorte qu'une rigidité sécante de ladite guipe est inférieure ou égale à une rigidité maximale qui correspond au rapport entre une force subie par la guipe de l'élément de solidarisation lors de l'application de la pression de galbage prédéterminée pour former l'espace et son allongement avant rupture : $E_{max} = F_{guipe} / A$, où : $F_{guipe}$ correspond à la force subie par la guipe de l'élément de solidarisation à la pression de galbage prédéterminée, A correspond à l'allongement de l'élément de solidarisation à cette pression de galbage.
- le procédé comprend en outre une étape d'enroulement de l'assemblage autour d'un tambour en appliquant une tension d'enroulage prédéterminée audit assemblage, et dans lequel une rigidité sécante de l'au moins un élément de solidarisation est supérieure ou égale à une rigidité minimale qui correspond au rapport d'une force subie par l'élément de solidarisation sous la tension d'enroulage prédéterminée et de l'allongement subi par l'élément de solidarisation sous cette tension d'enroulage : $E_{min} = F_{T\_renfort}/A_T$, où $F_{T\_renfort}$ correspond à la force subie par l'élément de solidarisation sous la tension d'enroulage $T$, $A_T$ correspond à l'allongement subi par l'élément de solidarisation sous cette tension d'enroulage.
- le procédé comprend en outre, préalablement à l'étape de fixation, une étape au cours de laquelle le premier axe et le deuxième axe sont superposés.

Selon un troisième aspect, l'invention propose un procédé de fabrication d'un pneumatique présentant un axe de révolution, ledit procédé comprenant les étapes suivantes :

- fournir un assemblage comme décrit ci-dessus,
- appliquer une pression de galbage de sorte à

  o former un espace annulaire délimité radialement par une face interne de la première structure et par une face interne de la deuxième structure et
  o rompre l'âme de l'élément de solidarisation sans rompre la guipe de l'élément de solidarisation.

Selon un quatrième aspect, l'invention propose un pneumatique présentant un axe de révolution et comprenant :

- un assemblage comme décrit ci-dessus, et
- un espace annulaire délimité radialement par une face interne de la première structure et par une face interne de la deuxième structure,

le pneumatique étant caractérisé en ce qu'il est obtenu par un procédé comme décrit ci-dessus de sorte que l'âme de l'élément de solidarisation est rompue mais pas la guipe dudit élément de solidarisation.

## BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :

La figure 1 est une vue en perspective et en coupe partielle d'un exemple de réalisation d'un pneumatique selon un mode de réalisation de l'invention représenté en l'absence de charge appliquée et de pression.

La figure 2 est un graphique illustrant l'allongement d'un élément de solidarisation en fonction de la force qui lui est appliquée.

La figure 3 est un organigramme illustrant des étapes d'un procédé de fabrication d'un assemblage conforme à un mode de réalisation de l'invention.

La figure 4a est une vue en coupe le long d'un élément de solidarisation d'un exemple de réalisation d'un assemblage conforme à l'invention, dans lequel l'élément de solidarisation est embarré dans la première structure et dans la deuxième structure.

La figure 4b est une vue en perspective d'un exemple de réalisation d'un assemblage conforme à l'invention, dans lequel l'élément de solidarisation est ancré dans la première structure et dans la deuxième structure.

La figure 5 illustre un exemple de réalisation d'un élément de solidarisation pouvant être utilisé dans un assemblage, un pneumatique et des procédés de fabrication associés conformes à l'invention.

## DESCRIPTION DETAILLEE D'UN MODE DE REALISATION

Assemblage 1

L'assemblage 1 comprend :

- une première structure 10 formée de premiers éléments filaires 15,
- une deuxième structure 12 formée de deuxièmes éléments filaires 16, et
- une structure porteuse 14 comprenant des éléments filaires porteurs 17 reliant la première structure 10 et la deuxième structure 12.

Des exemples d'assemblages 1 comprenant ces trois structures 10, 12, 14 et pouvant être utilisés ont par exemple été décrits en détails dans les documents WO2017/103490 et WO 2017/103491 décrits ci-avant.

Plus précisément, la première structure 10 est globalement trapézoïdale (par exemple parallélépipédique ou rectangulaire) et présente un premier bord longitudinal s'étendant suivant une première direction qui définit un premier axe 11, un deuxième bord longitudinal opposé au premier bord longitudinal et deux bords transversaux opposés s'étendant transversalement aux premier et deuxième bords longitudinaux.

De même, la deuxième structure 12 est globalement trapézoïdale (par exemple parallélépipédique ou rectangulaire) et présente un premier bord longitudinal s'étendant suivant une deuxième direction qui définit un deuxième axe 13, un deuxième bord longitudinal opposé au premier bord longitudinal et deux bords transversaux opposés, s'étendant transversalement aux premier et deuxième bords longitudinaux.

Dans un mode de réalisation, la première et la deuxième structure 10, 12 peuvent comprendre un tissu formé d'un entrecroisement de fils de chaine (les premiers et deuxièmes éléments filaires 15, 16) et de fils de trame. L'assemblage 1 est alors un tissu tridimensionnel.

En variante, la première et la deuxième structure 10, 12 peuvent comprendre un tricot, auquel cas l'assemblage 1 est un tricot tridimensionnel.

Quelle que soit la variante de réalisation, l'armature du tissu de la première et/ou de la deuxième structure 10, 12 peut être de type toile, serge, tricot ou satin. Dans le cas d'un assemblage 1 pour un pneumatique 4, une armure de type toile permet notamment d'atteindre de bonnes performances mécaniques.

Selon une autre variante encore, l'une parmi la première et la deuxième structure 10, 12 comprend un tissu, l'autre parmi la première et la deuxième structure 10, 12 pouvant comprendre un tricot.

Typiquement, l'assemblage 1 peut comprendre un tissu ou un tricot tridimensionnel du type armure toile simple ou double paroi, tels que par exemple le tissu double paroi PF-Farbroller-GR3-7103_01 commercialisé par la société PILE FABRICS GmbH et/ou le tricot N-02570-A01 commercialisé par la société HEATHCOAT FABRICS Limited.

L'assemblage 1 comprend en outre au moins un élément de solidarisation 18 filaire fixé d'une part aux premiers éléments filaires 15 et d'autre part aux deuxièmes éléments filaires 16.

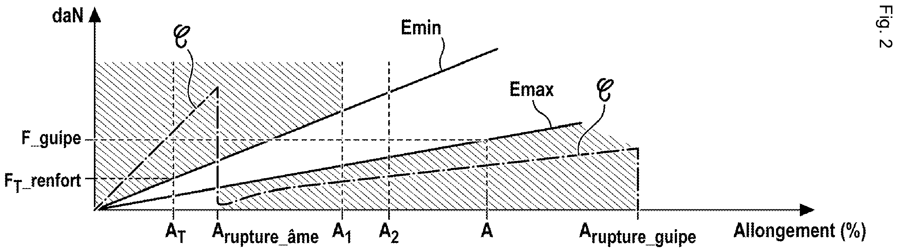

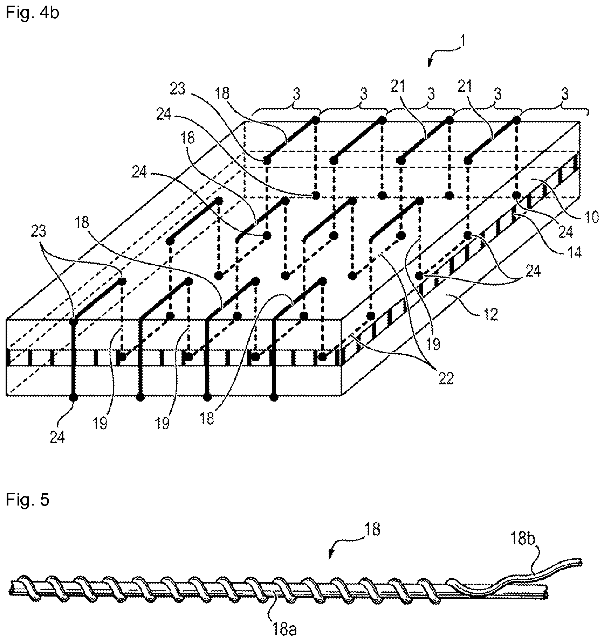

L'élément de solidarisation 18 comprend un élément filaire guipé comprenant un premier organe filaire, ou âme 18a, sensiblement rectiligne, autour duquel est enroulé un deuxième organe filaire, ou guipe 18b, et présente un comportement mécanique représenté par une courbe C définissant la force de traction appliquée à l'élément de solidarisation 18 (en daN) en fonction de son allongement (en %) telle que représentée, par exemple sur la figure 2. Un exemple de réalisation d'un élément de solidarisation 18 comprenant une âme 18a et une guipe 18b est illustré en figure 5.

L'élément de solidarisation 18 présente, avant rupture de l'âme 18a, une rigidité sécante strictement supérieure à celle de la guipe 18b. En revanche, la guipe 18b présente un allongement avant rupture $A_{rupture\_guipe}$ strictement supérieur à l'allongement avant rupture $A_{rupture\_âme}$ de l'âme 18a.

La rigidité sécante de l'élément de solidarisation 18 avant rupture de l'âme 18a, la rigidité sécante de la guipe 18b et l'allongement à la rupture de l'âme 18a sont choisis de sorte que l'âme 18a soit capable de maintenir la première structure 10 en position par rapport à la deuxième structure 12 pour que le premier axe 11 et le deuxième axe 13 soient parallèles pendant les étapes de manutention en se déformant peu mais qu'elle rompe avant le déploiement des éléments filaires porteurs 17. Puis, lors de la rupture de l'âme 18a à l'application de la pression de galbage, la guipe 18b prend le relai de l'âme 18a lors du déploiement des éléments filaires porteurs 17 afin d'éviter les à-coups et de créer des inhomogénéités structurelles dans l'assemblage 1 qui risqueraient de détériorer les performances du pneumatique 4.

En d'autres termes, l'élément de solidarisation 18 a une rigidité sécante importante aux faibles allongements lorsqu'il subit une force de traction dont la valeur est comprise entre zéro et la force à rupture de l'âme 18a, puis une plus faible rigidité sécante aux allongements plus importants lorsqu'il subit une force de traction dont la valeur est supérieure à la force à rupture de l'âme 18a mais inférieure à la force à rupture de la guipe 18b.

La courbe C de l'élément de solidarisation 18 est strictement croissante jusqu'à la rupture de l'âme, puis décroissante, puis de nouveau strictement croissante jusqu'à rupture de la guipe. Sur chaque partie croissante, cette courbe C est par conséquent bijective, de sorte que pour chaque valeur de la force en traction F appliquée à un élément de solidarisation 18 donné, il n'y a qu'une seule valeur d'allongement possible. L'homme du métier saura donc aisément déterminer l'allongement de l'élément de solidarisation 18 à partir d'une valeur de force en traction F qui lui est appliquée.

Un exemple de courbe C a été illustré en figure 2 a titre d'exemple non limitatif.

L'allongement de l'élément de solidarisation 18 en fonction de la valeur de la force de traction qui lui est appliquée permet de caractériser la rigidité sécante de l'élément de solidarisation 18 en utilisation, c'est-à-dire pendant la manutention de l'assemblage 1, le galbage du pneumatique 4 puis une fois le pneumatique 4 gonflé à sa pression de galbage.

En particulier, pour tout allongement avant rupture de l'âme 18a, la pente de la droite partant de l'origine et étant sécante en un point donné avec la courbe C correspondant à une valeur donnée de la force de traction ou à une valeur donnée de l'allongement correspond au module sécant de l'élément de solidarisation 18 pour cette force ou cet allongement.

De façon analogue, pour tout allongement après rupture de l'âme 18a, la pente de la droite partant du point de force nulle et d'allongement égal à l'allongement à rupture de l'âme 18a et étant sécante en un point donné avec la courbe C correspondant à une valeur donnée de la force de traction ou à une valeur donnée de l'allongement correspond au module sécant de la guipe 18b pour cette force ou cet allongement. sécant.

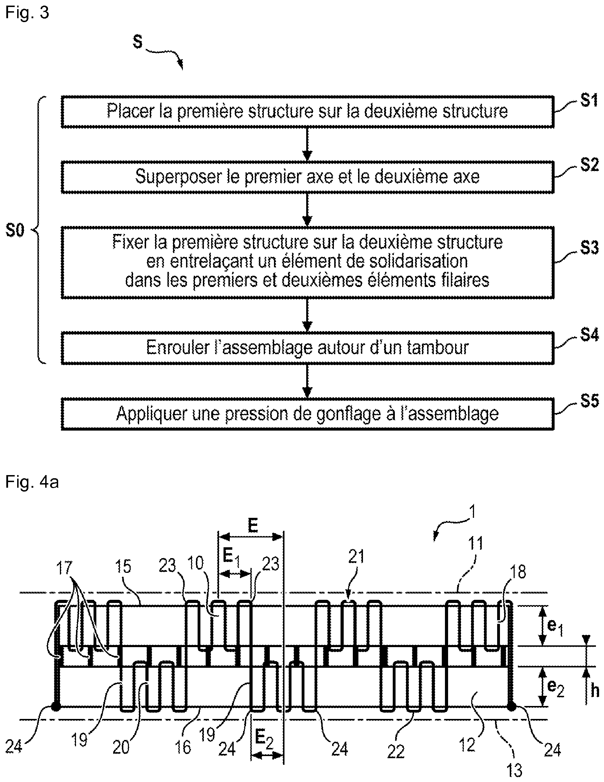

L'élément de solidarisation 18 peut être fixé à la première structure 10 et à la deuxième structure 12 au niveau de ses extrémités libres uniquement, par exemple par nouage, collage ou par soudure à ultrasons (référence 23 et 24 sur la figure 4b), puis entrelacé avec les premiers éléments filaires 15 et les deuxièmes éléments filaires 16. On notera que dans ce cas, l'élément de solidarisation 18 peut être embarré autour de plusieurs fils (de trame et/ou de chaîne) de l'une des structures 10, 12 puis autour de plusieurs fils (de trame et/ou de chaîne) de l'autre des structures 12, 10, etc. ou en variante être entrelacé autour d'un unique premier élément filaire 15 avant de passer directement autour d'un deuxième élément filaire 16, et ainsi de suite. Un exemple d'embarrage est par exemple illustré en figure 4a. Dans cet exemple, l'entrelacement est réalisé suivant un pas régulier (trois embarrages avant chaque passage dans la structure suivante). Un pas irrégulier ou non-périodique est cependant également envisageable.

En variante, l'élément de solidarisation 18 peut être ancré au niveau de ses extrémités libres mais également entre ses extrémités libres, avant chaque passage dans l'une ou l'autre des structures 10, 12. L'ancrage de l'élément de solidarisation 18 peut être effectué par collage, par nouage ou par soudure à ultrasons. Par exemple, l'élément de solidarisation 18 peut être ancré dans la première structure 10, par exemple par nouage (référence 19a et 24) autour d'un premier élément filaire 15, avant son passage dans la deuxième structure 12 où il est également ancré par nuage autour d'un deuxième élément filaire, puis retourner dans la première structure 10 où il est noué autour d'un autre premier élément filaire 15, et ainsi de suite.

Selon le mode de fixation choisi, on comprendra que le comportement de l'élément de solidarisation 18, et donc son dimensionnement, diffèrent. En effet, dans le cas d'un simple embarrage de l'élément de solidarisation 18 avec les premiers éléments filaires 15 et les deuxièmes éléments filaires 16, l'élément de solidarisation 18 se déforme non seulement dans sa portion 19 qui s'étend au sein de l'espace 2 défini entre la première structure 10 et la deuxième structure 12, mais également dans sa portion 20 embarrée au sein de chaque structure 10, 20. C'est donc l'ensemble de ces portions 19, 20 qui doivent être prises en compte lors de son dimensionnement. On notera que la portion 19 n'est enroulée autour d'aucun ou fixée à aucun élément filaire de la première structure 10 et de la deuxième structure 12 et est comprise entre deux points d'ancrage 23 et 24 successifs de l'élément de solidarisation 18 dans la première structure 10 et dans la deuxième structure 12.

A contrario, lorsque l'élément de solidarisation 18 est ancré dans la première structure 10 et dans la deuxième structure 12, seule la déformation de la portion 19 s'étendant entre deux points d'ancrage 23 et 24 successifs de l'éléments de solidarisation 18 doit être prise en compte pour son dimensionnement.

Par point d'ancrage 23, 24 de l'élément de solidarisation 18 dans la première structure 12 et dans la deuxième structure 12, respectivement, on comprendra ici le point de jonction entre chaque portion 19 de l'élément de solidarisation 18 qui s'étend au sein de l'espace 2 et chaque portion 21, 22 de l'élément de solidarisation 18 qui s'étend de part et d'autre d'une portion 19 donnée, autour duquel s'enroule une portion de l'élément de solidarisation 18 ou au niveau duquel l'élément de solidarisation 18 est fixé à un élément filaire de la première structure 10 ou de la deuxième structure 12.

Dans une forme de réalisation, l'élément de solidarisation 18 est dimensionné de sorte à remplir les trois conditions suivantes :

(i) être suffisamment déformable pour s'allonger suffisamment sans rompre et permettre la tension des éléments filaires porteurs 17 de la structure porteuse 14,

(ii) être suffisamment souple pour ne pas résister aux forces de galbage et ne pas empêcher la formation de l'espace 2 par écartement de la première structure 10 de la deuxième structure 12 lors du galbage,

(iii) être suffisamment rigide pour ne pas rompre pendant les étapes de manutention de l'ensemble et garantir ainsi le positionnement correct de la première structure 10 par rapport à la deuxième structure 12.

La première contrainte (i) a pour objectif de permettre l'écartement relatif de la première structure 10 et de la deuxième structure 12, par allongement élastique de l'élément de solidarisation 18 sans rupture. En effet, comme nous l'avons vu plus haut, la rupture de l'élément de solidarisation 18 créerait des inhomogénéités structurelles qui détériorent la qualité de la bande de roulement 7.

Pour cela, l'élément de solidarisation 18, et plus particulièrement la guipe 18b (puisque l'âme 18a doit rompre avant que les éléments filaires porteurs 17 ne soient déployés), est choisie de manière à être capable de s'allonger suffisamment pour permettre cet écartement.

Comme indiqué plus haut, l'allongement nécessaire diffère selon le mode de fixation de l'élément de solidarisation 18.

Dans le cas où l'élément de solidarisation 18 est simplement embarré dans la première et dans la deuxième structure 10, 12, la guipe 18b de l'élément de maintien 18 doit être capable de présenter un allongement avant rupture $A_{rupture\_guipe}$ (en %) supérieur au rapport $A_1$ entre la hauteur de conformation $h$ et la somme de l'épaisseur $e_1$ de la première structure 10, de l'épaisseur $e_2$ de la deuxième structure 12 et de la longueur d'embarrage E :

$$A_{rupture\_guipe} > A_1 = h \, / \, (E + e_1 + e_2)$$

où $h$ correspond à la distance, suivant une direction perpendiculaire à un plan normal à la première structure 10 lorsque celle-ci est posée sur une surface plane, entre les faces en regard de la première structure 10 et de la deuxième structure 12 lorsque lesdites structures 10, 12 sont écartées par application de la pression de galbage de sorte que les éléments filaires porteurs 17 soient tendus.

$e_1$ correspond à la dimension, suivant cette direction perpendiculaire, entre la face interne et la face externe de la première structure 10,

$e_2$ correspond à la dimension, suivant cette direction perpendiculaire, entre la face interne et la face externe de la deuxième structure 12,

E correspond à la longueur d'embarrage, c'est-à-dire la longueur curviligne de la portion embarrée de l'élément de solidarisation 18 au sein de la première structure 10 et de la deuxième structure 12, de part et d'autre d'une portion 19 (cette longueur curviligne ne comprenant pas la longueur curviligne de la portion 19). Cette longueur d'embarrage E est égale à la somme de la longueur curviligne E1 de la partie 21 de la portion 20 de l'élément de solidarisation 18 qui est embarrée dans la première structure 10 et d'une longueur curviligne E2 de la partie 22 de la portion 20 de l'élément de solidarisation 18 qui est embarrée dans la deuxième structure 12, où la longueur curviligne E1 est égale à la moitié de la longueur curviligne de l'élément de solidarisation 18 qui est embarrée entre deux points d'ancrage 23 successifs dans la première structure 10, et la longueur curviligne E2 est égale à la moitié de la longueur curviligne de l'élément de solidarisation 18 qui est embarrée entre deux points d'ancrage 24 successifs de l'élément de solidarisation 18 dans la deuxième structure 12. Dans le cas où l'élément de solidarisation 18 est ancré dans la première et dans la deuxième structure 10, 12, la guipe 18b de l'élément de solidarisation 18 doit être capable de présenter un allongement avant rupture $A_{rupture\_guipe}$ (en %) supérieur au rapport $A_2$ entre la hauteur de conformation h et la somme de l'épaisseur $e_1$ de la première structure 10 et de l'épaisseur $e_2$ de la deuxième structure 12 :

$$A_{rupture\_guipe} > A_2 = h / (e_1 + e_2).$$

En effet, les portions 21 et 22 de l'élément de solidarisation 18 qui sont au sein de la première structure 10 et de la deuxième structure 12 s'allongent indépendamment de la portion 19 qui les relie, puisqu'elles sont isolées de la portion 19 par les points d'ancrage 23 et 24.

La deuxième contrainte (ii) est de ne pas être trop rigide pour ne pas résister aux contraintes de galbage et empêcher l'écartement de la première structure 10 de la deuxième structure 12 lors du galbage. Le déploiement de l'assemblage 1 doit en effet pouvoir se faire sous une pression de galbage prédéterminée, dépendant du pneumatique 4 que l'on souhaite réaliser : l'élément de solidarisation 18 ne doit donc pas empêcher la séparation des structures 10, 12 lors de l'application de cette pression de galbage. En conséquence, la rigidité sécante de la guipe 18b de l'élément de solidarisation 18 (l'âme 18a rompant lors de l'application de la pression de galbage) doit être inférieure ou égale à la rigidité maximale admissible $E_{max}$, qui correspond au rapport entre la force $F_{renfort}$ subie par la guipe 18b à la pression de galbage et son allongement A lorsque l'espace 2 est formé par l'application de cette pression de galbage :

$$E_{max} = F_{guipe} / A$$

où $F_{guipe}$ correspond à la force subie par la guipe 18b de chaque élément de solidarisation 18 à la pression de galbage prédéterminée et
A correspond à l'allongement de l'élément de solidarisation 18 à cette pression de galbage.

Tout comme pour le premier critère, l'allongement A dépend du mode de fixation de l'élément de solidarisation 18.
Dans le cas d'une fixation par simple embarrage, l'allongement A de l'élément de solidarisation 18 est égal à la somme de la hauteur de conformation h, de l'épaisseur $e_1$ de la première structure 10, de l'épaisseur $e_2$ de la deuxième structure 12 et de la longueur d'embarrage E définis plus haut:

$$A = h /(E + e_1 + e_2)$$

Dans le cas d'une fixation par ancrage, l'allongement A de l'élément de solidarisation 18 est égal à la somme de la hauteur de conformation h, de l'épaisseur $e_1$ de la première structure 10 et de l'épaisseur $e_2$ de la deuxième structure 12 :

$$A = h / (e_1 + e_2)$$

La troisième contrainte (iii) est d'être suffisamment rigide pour ne pas rompre pendant les étapes de manutention de l'ensemble et garantir ainsi le positionnement correct de la première structure 10 par rapport à la deuxième structure 12.
Cette contrainte implique nécessairement que l'âme 18a doit rompre à un allongement $A_{rupture\_âme}$ inférieur à celui correspondant à l'état dans lequel les éléments filaires porteurs 17 sont tendus. Ainsi, dans le cas d'une fixation par simple embarrage, afin de permettre la rupture de l'âme 18a, on a :

$$A_{rupture\_âme} < h / (E + e_1 + e_2).$$

9

**EP 3 902 687 B1**

Dans le cas d'une fixation par ancrage, afin de permettre la rupture de l'âme 18a, on a

$$A_{rupture\_âme} < h / (e_1 + e_2).$$

On comprendra également que ce maintien est directement lié à la rigidité sécante de l'élément de solidarisation 18 aux petites déformations, et plus particulièrement à la rigidité sécante de son âme 18a qui assure le maintien de la première structure 10 par rapport à la deuxième structure 12 pendant les étapes de manutention. En pratique, un objectif est que, lorsque l'assemblage 1 est enroulé autour d'un tambour pour son stockage et sa manutention, la première structure 10 et la deuxième structure 12, qui subissent une tension d'enroulage T, ne se décalent pas d'une distance supérieure à une distance maximale d. Cette distance maximale d est typiquement de l'ordre d'un à cinq millimètres. Il en découle que la rigidité sécante de l'élément de solidarisation doit être supérieure ou égale au rapport $E_{min}$ de la force $F_{T\_renfort}$ vue par l'élément de solidarisation 18 sous cette tension d'enroulage T et de l'allongement $A_T$ que doit être capable de subir l'élément de solidarisation 18 sous cette même tension d'enroulage T :

$$F_{min} = F_{T\_renfort}/A_T$$

avec : $F_{T\_renfort} = T/N$
où N correspond à la moyenne, sur une longueur d'un mètre de l'assemblage 1, du nombre d'éléments de solidarisation 18 (âme 18a + guipe 18b) présents sur la largeur I du tissu.

Tout comme pour le premier critère, l'allongement $A_T$ de l'élément de solidarisation 18 sous la tension d'enroulage T dépend de son mode de fixation.

Dans le cas d'une fixation par simple embarrage, l'élément de solidarisation doit être capable de subir un allongement $A_T$ sans rompre défini comme suit ::

$$A_T = \frac{\sqrt{(e_1 + e_2)^2 + d^2} - (e_1 + e_2)}{(e_1 + e_2) + E}$$

Dans le cas d'une fixation par ancrage, l'allongement $A_T$ est défini comme suit :

$$A_T = \frac{\sqrt{(e_1 + e_2)^2 + d^2} - (e_1 + e_2)}{(e_1 + e_2)}$$

A titre d'exemple non limitatif, pour un ensemble comprenant dix éléments de solidarisation 18 comportant une âme 18a en rayonne 2x200 tex et une guipe 18b en élasthanne de 1280 tex tous les cinq centimètres dans le sens trame, la force à rupture $F_{rupture\_âme}$ de l'âme 18a est égale à 6 N (ce qui est compatible avec une force en traction $F_{T\_renfort}$ appliquée à l'élément de solidarisation 18 lors de l'application de la pression de gonflage de 10 N). Par ailleurs, pour une tension d'enroulage T égale à 60 kg et une distance maximale d égale à cinq millimètres, on obtient une rigidité sécante minimale $E_{min}$ égale à 4 mN/% dans le premier cas et égale à 940 mN/% dans le deuxième cas.

La figure 2 résume les conditions que doivent respecter l'âme 18a et la guipe 18b de l'élément de solidarisation 18 afin de remplir les trois conditions détaillées ci-avant ainsi que le critère sur la forceà rupture $F_{rupture\_âme}$ de l'âme 18a. Plus particulièrement, la zone hachurée représente l'ensemble des allongements et rigidités sécantes respectant ces critères. Comme cela est illustré sur cette figure, l'élément de solidarisation 18 est de préférence dimensionné de sorte que :

- l'allongement avant rupture de son âme 18a, ici 2%, soit supérieur à $A_T$,
- l'allongement avant rupture de sa guipe 18b, ici 500 %, soit supérieur à $A_1$ ou à $A_2$, selon son mode de fixation
- la rigidité sécante de sa guipe 18b soit inférieure à $E_{max}$
- la rigidité sécante de son âme 18a soit supérieure à $E_{min}$.

L'élément de solidarisation 18 peut comprendre l'un au moins des éléments suivants : un fil textile ou un fil en matériau composite. Le matériau constitutif de l'élément de solidarisation 18 est choisi de sorte à supporter les températures d'encollage. De préférence, l'élément de solidarisation 18 présente donc une température de fusion supérieure à 200°C, et de préférence supérieure à 230°C.

Par exemple, l'âme 18a et la guipe 18b peuvent chacun comprendre, indépendamment l'une de l'autre, au moins un brin multifilamentaire comprenant plusieurs monofilaments chacun constitué d'un matériau choisi parmi un polyester, un polyamide, une polycétone, un polyuréthane, une cellulose, une fibre minérale et un assemblage de ces matériaux.

Dans une forme de réalisation, la guipe 18b peut comprendre au moins un brin multifilamentaire comprenant plusieurs monofilaments chacun constitué d'un matériau choisi parmi un polyester, un polyamide, une polycétone, un polyuréthane, une cellulose et un assemblage de ces matériaux, de préférence choisi parmi un polyester, un polyuréthane et les assemblages de ces matériaux. Les organes filaires en polyuréthane présentent avantageusement des allongements avant rupture relativement élevés et des rigidités sécantes relativement faibles.

Par ailleurs, l'âme 18a peut comprendre au moins un brin multifilamentaire comprenant plusieurs monofilaments chacun constitué d'un matériau choisi parmi un polyester, un polyamide, une polycétone, une cellulose, une fibre minérale et les assemblages de ces matériaux, de préférence choisi parmi une cellulose et un assemblage de celluloses. Les organes filaires en cellulose présentent avantageusement des allongements avant rupture relativement faible et des rigidités sécantes relativement élevées.

De préférence, le premier axe 11 et le deuxième axe 13 sont en outre superposés et/ou les premiers et deuxièmes bords transversaux, de la première et de la deuxième structure 12, respectivement, sont superposés. Par superposés, on comprendra ici que le premier axe 11 et le deuxième axe 13 (respectivement les premiers et deuxième bords transversaux) appartiennent à un plan déterminé qui correspond au plan passant par le premier axe 11 (respectivement le premier bord transversal ou le deuxième bord transversal) et qui est perpendiculaire à la surface de la première structure 10 lorsque la première structure 10 est posée à plat sur une surface plane.

La tolérance d'alignement du premier axe 11 et du deuxième axe 13 et la tolérance de superposition des bords (longitudinaux et/ou transversaux) est inférieure ou égale à deux millimètres, de préférence inférieure ou égale à un millimètre.

Dans une forme de réalisation, à la fois le premier axe 11 et le deuxième axe 13 d'une part et les bords transversaux de la première 10 et de la deuxième structure 12 d'autre part sont superposés, de sorte que la première et la deuxième structure 10, 12 sont parfaitement superposées et alignées (avec une tolérance inférieure ou égale à deux millimètres, de préférence inférieure ou égale à un millimètre). Grâce à la fixation de l'élément de solidarisation 18 sur la première structure 10 et la deuxième structure 12 (ainsi que son embarrage et/ou son ancrage avec les premiers éléments filaires 15 et/ou les deuxièmes éléments filaires 16), l'alignement est assuré pendant l'intégralité de la manutention de l'assemblage 1 jusqu'à au moins sa première pose sur un tambour de confection 5 de pneumatique 4, et de préférence jusqu'à son gonflage à la pression de galbage.

L'élément de solidarisation 18 peut s'étendre de manière continue ou discontinue entre les bords transversaux et/ou entre les bords longitudinaux des première et deuxième structures 10, 12. En variante, l'élément de solidarisation 18 pourrait également s'étendre suivant un axe formant un angle non nul ni égal à 90° avec le premier axe 11.

Par continue, on comprendra ici que l'élément de solidarisation 18 s'étend sur toute la longueur L (respectivement toute la largeur l) de la première structure 10 (la longueur L correspondant à la plus petite distance entre les bords transversaux de la première structure 10 lorsque la première structure 10 est à plat ou, plus simplement, à la longueur L de ses bords longitudinaux lorsque la première structure 10 est parallélépipédique ou rectangulaire, tandis que la largeur l correspondant à la plus petite distance entre les bords longitudinaux de la première structure 10 lorsque la première structure 10 est à plat ou, plus simplement, à la largeur l de ses bords transversaux lorsque la première structure 10 est parallélépipédique ou rectangulaire).

Par discontinue, on comprendra ici que l'élément de solidarisation 18 s'étend sur une partie seulement de la longueur L (respectivement, de la largeur l) de la première structure 10, de préférence sur au moins 50% de sa longueur L (respectivement, de la largeur l). Dans ce cas, l'élément de solidarisation 18 comprend de préférence au moins deux segments adjacents séparés d'une distance déterminée. Afin de garantir que la première structure 10 et la deuxième structure restent parfaitement alignées et superposées en tout point de l'assemblage 1, même lors de la manutention de l'assemblage 1, la distance peut notamment être au plus égale à un mètre. Dans un mode de réalisation, la distance est inférieure à un mètre, de préférence inférieure à 75 cm. Afin de couvrir au moins 50% de la longueur L de la première structure 10, on comprendra que le nombre de segments de l'élément de solidarisation 18 augmente lorsque leur dimension diminue.

La largeur (dimension dans le plan de la première structure 10 et s'étendant suivant une direction perpendiculaire aux bords longitudinaux de la première structure 10) de l'élément de solidarisation 18 peut être continue sur la longueur L (respectivement, de la largeur l) de la première structure 10, ou variable. Une largeur continue est cependant plus aisée à réaliser industriellement et à dimensionner.

L'élément de solidarisation 18 peut s'étendre le long et de manière adjacente à l'un des bords longitudinaux (respectivement, des bords transversaux) de la première structure 10 ou en variante à distance dudit bord longitudinal (respectivement, du bord transversal).

De manière optionnelle, la face externe (c'est-à-dire la face opposée à l'espace 2 formé entre la première et la deuxième structure 10, 12) de la première structure 10 et la deuxième structure 12 peut être imprégnée d'une composition élastomérique.

Exemple d'assemblage 1

Pour une pression de galbage égale à 0,01 MPa, une tension d'enroulage égale à 60 kg, une distance minimale d égale à cinq millimètres, un assemblage 1 comprenant dix éléments de solidarisation 18 dans la largeur l pour cinq centimètres et un élément de solidarisation 18 dans la longueur L pour vingt centimètres soit N=300, une surface $S_{pneu}$ égale à 0.3 m$^2$, une épaisseur de la première et de la deuxième structure 10, 20 (e1 + e2) égale à 0.8 mm, une hauteur de conformation h égale à 40 mm, une longueur d'embarrage E égale à 20 cm:

- l'allongement minimal $A_1$ (cas d'un embarrage des éléments de solidarisation 18) est égal à 20 %
- l'allongement minimal $A_2$ (cas d'un ancrage des éléments de solidarisation 18) est égal à 5000 %,
- la rigidité maximale $E_{max}$ est égale à 2mN/% (cas d'un embarrage des éléments de solidarisation 18) ou 500 mN/% (cas d'un ancrage des éléments de solidarisation 18),
- la rigidité minimale $E_{min}$ est égale à 4mN/% (cas d'un embarrage des éléments de solidarisation 18) ou 940 mN/% (cas d'un ancrage des éléments de solidarisation 18).

Dans ce cas, un exemple d'élément de solidarisation 18 pouvant être utilisé et remplissant les trois conditions (i), (ii) et (iii) décrites plus haut est un fil textile guipé comprenant une âme 18a en rayonne 2x200 dont le titre est de dtex et une guipe en Elasthanne dont le titre est de 1280 dtex de sorte que l'élément de solidarisation présente une densité égale à 1.2 g/cm$^3$.

Procédé de fabrication S0 d'un assemblage 1

Un exemple de fabrication S0 d'un tel assemblage 1 va à présent être décrit. Au cours d'une première étape S1, un ensemble comprenant une première structure 10, une deuxième structure 12 et une structure porteuse 14 est amené. Cet ensemble est généralement réalisé préalablement de manière connue en soi et/ou peut être fourni sous forme de rouleau, par exemple auprès des sociétés PILE FABRICS GmbH ou GIRMES INTERNATIONAL GmbH.

Dans le cas où l'ensemble est fourni sous la forme d'un rouleau, l'ensemble est déroulé et placé à plat de sorte que l'une parmi la première et la deuxième structure 10, 12 se trouve sur une surface support. Dans cette position, la première et la deuxième structure 10, 12 sont donc empilées sur la surface support, les éléments filaires porteurs 17 de la structure porteuse 14 étant déjà entrelacés avec les premiers et deuxièmes éléments filaires 15, 16. Au cours d'une deuxième étape S2, la position de la première et de la deuxième structure 10, 12 est ajustée de sorte que le premier axe 11 et le deuxième axe 13 deviennent parallèles et le cas échéant superposés. De manière optionnelle, leur position est également ajustée de sorte que leurs premiers bords transversaux et/ou leurs deuxièmes bords transversaux soient superposés.

De préférence, la position de la première et de la deuxième structure 10, 12 est ajustée de sorte que le premier axe 11 et le deuxième axe 13 soient parallèle et superposés et que leur premier et leur deuxième bord transversal soient superposés. On comprendra bien entendu que les étapes S1 et S2 peuvent être réalisées simultanément ou successivement, auquel cas ces étapes S1, S2 peuvent être mises en œuvre dans un ordre différent sans sortir pour autant de la portée de l'invention.

Lors de ces étapes S1, S2, la première et la deuxième structure 10, 12 peuvent être à plat sur toute leur longueur L, ou en variante l'ensemble peut n'être déroulé qu'en partie, le reste de l'ensemble étant déroulé au fur et à mesure pendant la troisième étape du procédé S0.

Au cours d'une troisième étape S3, la première et la deuxième structure 10, 12 sont fixées ensemble par au moins un élément de solidarisation 18, en entrelaçant l'élément de solidarisation 18 avec les premiers et les deuxièmes éléments filaires 15, 16 et/ou en l'ancrant dans la première et la deuxième structure 10, 12, afin d'empêcher le mouvement de la première structure 10 par rapport à la deuxième structure 12 lors de la manutention et de l'utilisation de l'assemblage 1. Lorsque l'élément de solidarisation 18 est fixé sur la première structure 10 ou la deuxième structure, sa fixation peut être réalisée par couture, par collage ou par soudure à ultrasons.

La première et la deuxième structure 10, 12 peuvent être fixées à l'aide d'un unique élément de solidarisation ou, comme illustré sur les figures, par plusieurs éléments de solidarisation 18 distincts. Dans ce cas, les éléments de solidarisation 18 distincts peuvent s'étendre parallèlement les uns aux autres et/ou transversalement les uns aux autres. De préférence, afin d'homogénéiser encore davantage les contraintes dans l'assemblage 1 et de simplifier la fabrication de l'assemblage 1, les éléments de solidarisation 18 sont écartés suivant un pas sensiblement constant les uns des autres.

En variante, les étapes S1 à S3 peuvent être réalisées directement chez le tisseur dans le métier à tisser utilisé pour la réalisation de l'ensemble, afin de garantir que la première et la deuxième structure 10, 12 soient parfaitement alignées et d'éviter des opérations d'enroulage et de déroulage susceptibles de générer des difficultés d'alignement.

De manière optionnelle, la face externe de la première structure 10 et la deuxième structure 12 peuvent être imprégnées d'une composition élastomérique, typiquement du caoutchouc, par exemple par calandrage. Cette imprégnation peut être réalisée après la fixation S3 des première et deuxième structure 12 avec l'élément de solidarisation 18.

Le cas échéant, au cours d'une quatrième étape S4, l'assemblage 1 peut ensuite être manutentionné et notamment enroulé autour d'un cylindre en vue de son stockage avant son utilisation. L'élément de solidarisation 18 est alors soumis à une tension d'enroulage T. Cette manutention est notamment facilitée par la fixation solidaire de la première structure 10 avec la deuxième structure 12, qui évite tout glissement de l'une des structures 10, 12 par rapport à l'autre 12, 10, et par la capacité de l'élément de solidarisation 18 à subir cette tension d'enroulage T sans se déformer.

Réalisation d'un pneumatique 4

L'assemblage 1 ainsi obtenu peut notamment être utilisé dans la réalisation d'un pneumatique 4.

Pour cela, l'assemblage 1 est placé sur un tambour de confection 5 en vue de réaliser un pneumatique 4. Le cas échéant, l'assemblage 1 peut être préalablement découpé.

Un espace annulaire 2 délimité radialement par une face interne de la première structure 10 et une face interne de la deuxième structure 12 est ensuite formé (voir figure 1). Au cours de la formation de cet espace, l'élément de solidarisation 18 s'allonge sans rompre, permettant ainsi l'écartement radial de la première structure 10 par rapport à la deuxième structure 12. L'espace annulaire 2 peut par exemple être formé par gonflage en appliquant une pression de galbage prédéterminée (étape S5).

On notera en particulier que l'âme 18a de l'élément de solidarisation 18 permet de garantir le positionnement correct de la première structure 10 par rapport à la deuxième structure 12 jusqu'à leur pose sur le tambour de confection 5. En effet, la rigidité sécante de l'âme 18a de l'élément de solidarisation 18 étant choisie de sorte à être supérieure à $E_{min}$, qui est déterminée en fonction de la tension d'enroulage T et de son mode de fixation (par embarrage ou ancrage), elle est capable de maintenir la première structure 10 alignée avec la deuxième structure 12. De plus, l'âme 18a rompant lors du galbage du pneumatique 4 et la rigidité sécante de la guipe 18b de l'élément de solidarisation 18 étant inférieure à $E_{max}$, l'élément de solidarisation 18 n'empêche pas le déploiement de l'assemblage 1 lors de l'application de la pression de galbage S5.

Le pneumatique 4 est alors fabriqué en rapportant et en fixant successivement un sommet 6 et une bande de roulement 7 sur l'assemblage 1 ainsi déployé. Le sommet 6 et la bande de roulement 7 peuvent être conventionnels.

On pourra notamment se référer aux documents WO2017/103490 et WO 2017/103491 décrits ci-avant pour plus de détails sur des moyens de fabrication d'un pneumatique 4 avec un tel assemblage 1.

**Revendications**

1. Assemblage (1) pour un pneumatique comprenant :

   - une première structure (10) formée de premiers éléments filaires (15), la première structure (10) présentant un bord longitudinal s'étendant suivant une première direction qui définit un premier axe (11),
   - une deuxième structure (12) formée de deuxièmes éléments filaires (16), la deuxième structure (12) comprenant un bord longitudinal s'étendant suivant une deuxième direction qui définit un deuxième axe (13), le premier axe (11) et le deuxième axe (13) étant parallèles,
   - une structure porteuse (14) comprenant des éléments filaires porteurs (17) reliant les premiers éléments filaires (15) de la première structure (10) et les deuxièmes éléments filaires (16) de la deuxième structure (12), et
   - au moins un élément de solidarisation (18) filaire fixé aux premiers éléments filaires (15) et aux deuxièmes éléments filaires (16),

   l'assemblage (1) étant **caractérisé en ce que** l'au moins un élément de solidarisation (18) comprend un élément filaire guipé comportant une âme (18a) autour de laquelle est enroulée une guipe (18b), dans lequel :

   - l'âme (18a) de l'élément de solidarisation (18) présente un allongement avant rupture $A_{rupture\_âme}$ inférieur au rapport $A_1$ entre une hauteur de conformation h de l'assemblage (1) et la somme d'une épaisseur $e_1$ de la première structure (10), d'une épaisseur $e_2$ de la deuxième structure (12) et d'une longueur d'embarrage E :

$$A_{rupture\_âme} < A_1 = h \, / \, (E + e_1 + e_2)$$

où : $A_{rupture\_âme}$ est l'allongement avant rupture de l'âme (18a),

h est la hauteur de conformation de l'assemblage, correspondant à une hauteur entre des faces en regard de la première structure (10) et de la deuxième structure (12) lorsque les éléments filaires porteurs (17) sont tendus,
$e_1$ est l'épaisseur de la première structure (10),
$e_2$ est l'épaisseur de la deuxième structure (12),
E est la longueur d'embarrage, qui est égale à la somme d'une première longueur curviligne (E1) de la partie (21) de la portion (20) de l'élément de solidarisation (18) qui est embarrée dans la première structure (10) et d'une deuxième longueur curviligne (E2) de la partie (22) de la portion (20) de l'élément de solidarisation (18) qui est embarrée dans la deuxième structure (12), où la première longueur curviligne (E1) est égale à la moitié de la longueur curviligne de l'élément de solidarisation (18) qui est embarrée entre deux points d'ancrage (23) successifs dans la première structure (10), et la deuxième longueur curviligne (E2) est égale à la moitié de la longueur curviligne de l'élément de solidarisation (1)8 qui est embarrée entre deux points d'ancrage (24) successifs de l'élément de solidarisation (18) dans la deuxième structure (12), et

- la guipe (18b) de l'élément de solidarisation (18) présente un allongement avant rupture $A_{rupture\_guipe}$ supérieur à un allongement égal audit rapport $A_1$ entre la hauteur de conformation (h) de l'assemblage (1) et la somme de l'épaisseur $e_1$ de la première structure (10), de l'épaisseur $e_2$ de la deuxième structure (12) et de la longueur d'embarrage E :

$$A_{rupture\_guipe} > A_1 = h \, / \, (E + e_1 + e_2)$$

où : $A_{rupture\_quipe}$ est l'allongement avant rupture de l'âme (18a).

2. Assemblage (1) selon la revendication 1, dans lequel

- l'élément de solidarisation (18) présente une première rigidité sécante et l'âme (18a) présente un premier allongement avant rupture $A_{rupture\_âme}$,
- la guipe (18b) présente une deuxième rigidité sécante et un deuxième allongement avant rupture $A_{rupture\_guipe}$,

la première rigidité sécante de l'élément de solidarisation (18) étant strictement supérieure à la deuxième rigidité sécante de la guipe (18b), le premier allongement avant rupture $A_{rupture\_âme}$ de l'âme (18a) étant strictement inférieur au deuxième allongement avant rupture $A_{rupture\_guipe}$ de la guipe (18b).

3. Assemblage (1) selon la revendication 1 ou 2, dans lequel l'au moins un élément de solidarisation (18) présente deux extrémités libres opposées et est ancré aux premiers éléments filaires (15) et aux deuxièmes éléments filaires (16) au niveau de ses extrémités libres et est embarré dans la première et dans la deuxième structure (10, 12) entre ses extrémités libres.

4. Assemblage (1) selon la revendication 1 ou 2, dans lequel l'au moins un élément de solidarisation (18) présente deux extrémités libres opposées et est ancré aux premiers éléments filaires (15) et aux deuxièmes éléments filaires (16) au niveau de ses extrémités libres et en plusieurs points entre ses extrémités libres, et dans lequel :

- l'allongement avant rupture de l'âme $A_{rupture\_âme}$ est inférieur au rapport $A_2$ entre une hauteur de conformation h de l'assemblage (1) et la somme de l'épaisseur $e_1$ de la première structure (10), et de l'épaisseur $e_2$ de la deuxième structure (12):

$$A_{rupture\_âme} < A_2 = h \, / \, (e_1 + e_2),$$

- l'allongement avant rupture $A_{rupture\_guipe}$ de la guipe est supérieur audit rapport $A_2$ entre une hauteur de conformation h de l'assemblage (1) et la somme de l'épaisseur $e_1$ de la première structure (10), et de l'épaisseur $e_2$ de la deuxième structure (12) :

$$A_{rupture\_guipe} > A_2 = h / (e_1 + e_2).$$

5. Assemblage (1) selon l'une quelconque des revendications 1 à 4, dans lequel une rigidité sécante de la guipe (18b) de l'élément de solidarisation (18) est inférieure ou égale à une rigidité maximale $E_{max}$ qui correspond au rapport entre une force $F_{guipe}$ subie par la guipe (18b) de l'élément de solidarisation (18) lors de l'application d'une pression de galbage prédéterminée de sorte à former un espace (2) séparant la première structure (10) et la deuxième structure (12) l'une de l'autre, et son allongement à cette pression de galbage A :

$$E_{max} = F_{guipe} / A$$

où : $F_{guipe}$ correspond à la force subie par la guipe (18b) de l'au moins un élément de solidarisation (18) à la pression de galbage prédéterminée, et
A correspond à l'allongement de l'élément de solidarisation (18) à cette pression de galbage.

6. Assemblage (1) selon l'une des revendications 1 à 5, dans lequel une rigidité sécante de l'élément de solidarisation (18) est supérieure ou égale à une rigidité minimale $E_{min}$ qui correspond au rapport d'une force $F_{T\_renfort}$ subie par l'élément de solidarisation (18) sous une tension d'enroulage T prédéterminée et de l'allongement $A_T$ que doit être capable de subir l'élément de solidarisation (18) sous cette même tension d'enroulage T :

$$E_{min} = F_{T\_renfort}/A_T$$

où : $F_{T\_renfort}$ correspond à la force subie par l'élément de solidarisation sous la tension d'enroulage T, et
$A_T$ correspond à l'allongement que doit être capable de subir l'élément de solidarisation (18) sous cette même tension d'enroulage T.

7. Procédé de fabrication (S0) d'un assemblage (1) selon l'une des revendications 1 à 6, ledit procédé de fabrication (S0) comprenant les étapes suivantes :

- placer (S1) la première structure (10) sur la deuxième structure (12) de sorte que le premier axe (11) et le deuxième axe (13) sont sensiblement parallèles, et
- fixer (S3) la première structure (10) sur la deuxième structure (12) en fixant au moins un élément de solidarisation (18) aux premiers éléments filaires (15) et aux deuxièmes éléments filaires (16),
le procédé de fabrication (S0) étant **caractérisé en ce que** l'au moins un élément de solidarisation (18) comprend un élément filaire guipé comportant une âme (18a) autour de laquelle est enroulée une guipe (18b) et dans lequel :

- l'âme (18a) de l'élément de solidarisation (18) présente un allongement avant rupture $A_{rupture\_âme}$ inférieur au rapport $A_1$ entre une hauteur de conformation h de l'assemblage (1) et la somme d'une épaisseur $e_1$ de la première structure (10), d'une épaisseur $e_2$ de la deuxième structure (12) et d'une longueur d'embarrage E :

$$A_{rupture\_âme} < A_1 = h / (E + e_1 + e_2)$$

où : $A_{rupture\_âme}$ est l'allongement avant rupture de l'âme (18a) h est la hauteur de conformation de l'assemblage, correspondant à une hauteur entre des faces en regard de la première structure (10) et de la deuxième structure (12) lorsque les éléments filaires porteurs (17) sont tendus,
$e_1$ est l'épaisseur de la première structure (10),
$e_2$ est l'épaisseur de la deuxième structure (12),
E est la longueur d'embarrage, qui est égale à la somme de la longueur curviligne E1 de la partie 21 de la portion 20 de l'élément de solidarisation 18 qui est embarrée dans la première structure 10 et d'une longueur curviligne E2 de la partie 22 de la portion 20 de l'élément de solidarisation 18 qui est embarrée dans la deuxième structure 12, où la longueur curviligne E1 est égale à la moitié de la longueur curviligne de l'élément de solidarisation 18 qui est embarrée entre deux points d'ancrage 23 successifs dans la première structure 10, et la longueur curviligne E2 est égale à la moitié de la longueur curviligne de l'élément de solidarisation 18 qui est embarrée entre deux points d'ancrage 24 successifs de l'élément de solidarisation 18 dans la deuxième structure

12. et

- la guipe (18b) de l'élément de solidarisation (18) présente un allongement avant rupture $A_{rupture\_guipe}$ supérieur à un allongement égal audit rapport $A_1$ entre la hauteur de conformation h de l'assemblage (1) et la somme de l'épaisseur $e_1$ de la première structure (10), de l'épaisseur $e_2$ de la deuxième structure (12) et de la longueur d'embarrage E :

$$A_{rupture\_guipe} > A_1 = h / (E + e_1 + e_2).$$

où : $A_{rupture\_quipe}$ est l'allongement avant rupture de l'âme (18a).

8. Procédé de fabrication (S0) selon la revendication 7, dans lequel

- l'élément de solidarisation (18) présente une première rigidité sécante et l'âme (18a) présente un premier allongement avant rupture $A_{rupture\_âme}$,
- la guipe (18b) présente une deuxième rigidité sécante et un deuxième allongement avant rupture $A_{rupture\_guipe}$,

la première rigidité sécante de l'élément de solidarisation (18) étant strictement supérieure à la deuxième rigidité sécante de la guipe (18b), le premier allongement avant rupture $A_{rupture\_âme}$ de l'âme (18a) étant strictement inférieur au deuxième allongement avant rupture $A_{rupture\_guipe}$ de la guipe (18b).

9. Procédé de fabrication (S0) selon la revendication 7 ou 8, dans lequel l'au moins un élément de solidarisation (18) présente deux extrémités libres opposées, l'étape de fixation comprenant les sous-étapes d'ancrage dudit au moins un élément de solidarisation (18) aux premiers éléments filaires (15) et aux deuxièmes éléments filaires (16) au niveau de ses extrémités libres et d'embarrage dudit élément de solidarisation (18) dans la première et dans la deuxième structure (10, 12) entre ses extrémités libres.

10. Procédé de fabrication (S0) selon la revendication 7 ou 8, dans lequel l'au moins un élément de solidarisation (18) présente deux extrémités libres opposées, l'étape de fixation (S0) étant réalisée par ancrage dudit au moins un élément de solidarisation (18) aux premiers éléments filaires (15) et aux deuxièmes éléments filaires (16) au niveau de ses extrémités libres et en plusieurs points entre ses extrémités libres, l'élément de solidarisation (18) étant dimensionné de sorte que :

- l'allongement avant rupture de l'âme $A_{rupture\_âme}$ est inférieur au rapport $A_2$ entre une hauteur de conformation h de l'assemblage (1) et la somme de l'épaisseur $e_1$ de la première structure (10), et de l'épaisseur $e_2$ de la deuxième structure (12):

$$A_{rupture\_âme} < A_2 = h / (e_1 + e_2),$$

- l'allongement avant rupture $A_{rupture\_guipe}$ de la guipe est supérieur audit rapport $A_2$ entre une hauteur de conformation h de l'assemblage (1) et la somme de l'épaisseur $e_1$ de la première structure (10), et de l'épaisseur $e_2$ de la deuxième structure (12) :

$$A_{rupture\_guipe} > A_2 = h / (e_1 + e_2).$$

11. Procédé de fabrication (S0) selon l'une des revendications 7 à 10, dans lequel la première structure (10) et la deuxième structure (12) sont configurées pour être écartées par application d'une pression de galbage prédéterminée de sorte à former un espace (2) séparant la première structure (10) et la deuxième structure (12) l'une de l'autre, et la guipe (18b) de l'au moins un élément de solidarisation est dimensionnée de sorte qu'une rigidité sécante de ladite guipe (18b) est inférieure ou égale à une rigidité maximale $E_{max}$ qui correspond au rapport entre une force $F_{guipe}$ subie par la guipe (18b) de l'élément de solidarisation (18) lors de l'application de la pression de galbage prédéterminée pour former l'espace (2) et son allongement avant rupture A :

$$E_{max} = F_{guipe} / A$$

où : $F_{guipe}$ correspond à la force subie par la guipe (18b) de l'élément de solidarisation à la pression de galbage prédéterminée,

A correspond à l'allongement de l'élément de solidarisation (18) à cette pression de galbage.

12. Procédé de fabrication (S0) selon l'une des revendications 7 à 11, comprenant en outre une étape (S4) d'enroulement de l'assemblage (1) autour d'un tambour en appliquant une tension d'enroulage T prédéterminée audit assemblage (1), et dans lequel une rigidité sécante de l'au moins un élément de solidarisation (18) est supérieure ou égale à une rigidité minimale $E_{min}$ qui correspond au rapport d'une force $\sigma_{T\_renfort}$ subie par l'élément de solidarisation (18) sous la tension d'enroulage T prédéterminée et de l'allongement $A_T$ subi par l'élément de solidarisation (18) sous cette tension d'enroulage T :

$$E_{min} = F_{T\_renfort}/A_T$$

où : $F_{T\_renfort}$ correspond à la force subie par l'élément de solidarisation sous la tension d'enroulage T
$A_T$ correspond à l'allongement subi par l'élément de solidarisation (18) sous cette tension d'enroulage T.

13. Procédé de fabrication (S0) d'un assemblage (1) selon l'une des revendications 7 à 12, comprenant en outre, préalablement à l'étape de fixation (S3), une étape (S2) au cours de laquelle le premier axe (11) et le deuxième axe (13) sont superposés.

14. Procédé de fabrication (S) d'un pneumatique présentant un axe de révolution, ledit procédé comprenant les étapes suivantes :

- fournir un assemblage (1) selon l'une des revendications 1 à 6, appliquer une pression de galbage (S5) de sorte à:

. former un espace annulaire (2) délimité radialement par une face interne de la première structure (10) et par une face interne de la deuxième structure (12) et
. rompre l'âme (18a) de l'élément de solidarisation (18) sans rompre la guipe (18b) de l'élément de solidarisation (18).

15. Pneumatique (4) présentant un axe de révolution et comprenant:

- un assemblage (1) selon l'une des revendications 1 à 6, et
- un espace annulaire (2) délimité radialement par une face interne de la première structure (10) et par une face interne de la deuxième structure (12), le pneumatique étant **caractérisé en ce qu'**il est obtenu par un procédé selon la revendication 14 de sorte que l'âme (18a) de l'élément de solidarisation (18) est rompue mais pas la guipe (18b) dudit élément de solidarisation.

**Patentansprüche**

1. Anordnung (1) für einen Reifen, umfassend:

- eine erste Struktur (10), die aus ersten fadenförmigen Elementen (15) gebildet wird, wobei die erste Struktur (10) einen Längsrand aufweist, der sich entlang einer ersten Richtung erstreckt, die eine erste Achse (11) definiert,
- eine zweite Struktur (12), die aus zweiten fadenförmigen Elementen (16) gebildet wird, wobei die zweite Struktur (12) einen Längsrand aufweist, der sich entlang einer zweiten Richtung erstreckt, die eine zweite Achse (13) definiert, wobei die erste Achse (11) und die zweite Achse (13) parallel sind,
- eine tragende Struktur (14), die tragende fadenförmige Elemente (17) umfasst, die die ersten fadenförmigen Elemente (15) der ersten Struktur (10) und die zweiten fadenförmigen Elemente (16) der zweiten Struktur (12) verbinden, und
- mindestens ein fadenförmiges Verbindungselement (18), das an den ersten fadenförmigen Elementen (15) und an den zweiten fadenförmigen Elementen (16) fixiert ist, wobei die Anordnung (1) **dadurch gekennzeichnet ist, dass** das mindestens eine Verbindungselement (18) ein umsponnenes fadenförmiges Element umfasst, das eine Seele (18a) beinhaltet, um die eine Umspinnung (18b) gewickelt ist, bei dem:

- die Seele (18a) des Verbindungselements (18) eine Zerreißdehnung $A_{Zerreiß\_Seele}$ aufweist, die geringer als das Verhältnis $A_1$ zwischen einer Formungshöhe h der Anordnung (1) und der Summe aus einer Dicke $e_1$ der ersten Struktur (10), aus einer Dicke $e_2$ der zweiten Struktur (12) und aus einer Umschlingungslänge E ist:

$$A_{Zerreiß\_Seele} < A_1 = h \ / \ (E + e_1 + e_2)$$

worin: $A_{Zerreiß\_Seele}$ die Zerreißdehnung der Seele (18a) ist, h die Formungshöhe der Anordnung ist, die einer Höhe zwischen gegenüberliegenden Seiten der ersten Struktur (10) und der zweiten Struktur (12) entspricht, wenn die tragenden fadenförmigen Elemente (17) gespannt sind,
$e_1$ die Dicke der ersten Struktur (10) ist,
$e_2$ die Dicke der zweiten Struktur (12) ist,
E die Umschlingungslänge ist, die gleich der Summe aus einer ersten krummlinigen Länge (E1) des Teils (21) des Abschnitts (20) des Verbindungselements (18), der in der ersten Struktur (10) umschlungen ist, und aus einer zweiten krummlinigen Länge (E2) des Teils (22) des Abschnitts (20) des Verbindungselements (18), der in der zweiten Struktur (12) umschlungen ist, ist, wobei die erste krummlinige Länge (E1) gleich der Hälfte der krummlinigen Länge des Verbindungselements (18) ist, die zwischen zwei aufeinanderfolgenden Verankerungspunkten (23) in der ersten Struktur (10) umschlungen ist, und die zweite krummlinige Länge (E2) gleich der Hälfte der krummlinigen Länge des Verbindungselements (18) ist, die zwischen zwei aufeinanderfolgenden Verankerungspunkten (24) des Verbindungselements (18) in der zweiten Struktur (12) umschlungen ist, und

- die Umspinnung (18b) des Verbindungselements (18) eine Zerreißdehnung $A_{Zerreiß\_Umspinnung}$ aufweist, die größer als eine Dehnung ist, die gleich dem Verhältnis $A_1$ zwischen der Formungshöhe h der Anordnung (1) und der Summe aus der Dicke $e_1$ der ersten Struktur (10), aus der Dicke $e_2$ der zweiten Struktur (12) und aus der Umschlingungslänge (E) ist:

$$A_{Zerreiß\_Umspinnung} > A_1 = h \ / \ (E + e_1 + e_2)$$

worin: $A_{Zerreiß\_Umspinnung}$ die Zerreißdehnung der Seele (18a) ist.

**2.** Anordnung (1) nach Anspruch 1, bei der

- das Verbindungselement (18) eine erste Sekantensteifigkeit aufweist und die Seele (18a) eine erste Zerreißdehnung $A_{Zerreiß\_Seele}$ aufweist,
- die Umspinnung (18b) eine zweite Sekantensteifigkeit und eine zweite Zerreißdehnung $A_{Zerreiß\_Umspinnung}$ aufweist, wobei die erste Sekantensteifigkeit des Verbindungselements (18) strikt größer als die zweite Sekantensteifigkeit der Umspinnung (18b) ist, wobei die erste Zerreißdehnung $A_{Zerreiß\_Seele}$ der Seele (18a) strikt kleiner als die zweite Zerreißdehnung $A_{Zerreiß\_Umspinnung}$ der Umspinnung (18b) ist.

**3.** Anordnung (1) nach Anspruch 1 oder 2, bei der das mindestens eine Verbindungselement (18) zwei entgegengesetzte freie Enden aufweist und an den ersten fadenförmigen Elementen (15) und an den zweiten fadenförmigen Elementen (16) im Bereich seiner freien Enden verankert ist und in der ersten und in der zweiten Struktur (10, 12) zwischen seinen freien Enden umschlungen ist.

**4.** Anordnung (1) nach Anspruch 1 oder 2, bei der das mindestens eine Verbindungselement (18) zwei entgegengesetzte freie Enden aufweist und an den ersten fadenförmigen Elementen (15) und an den zweiten fadenförmigen Elementen (16) im Bereich seiner freien Enden und an mehreren Stellen zwischen seinen freien Enden verankert ist und bei der:

- die Zerreißdehnung der Seele $A_{Zerreiß\_Seele}$ geringer als das Verhältnis $A_2$ zwischen einer Formungshöhe h der Anordnung (1) und der Summe aus der Dicke $e_1$ der ersten Struktur (10) und aus der Dicke $e_2$ der zweiten Struktur (12) ist:

$$A_{Zerreiß\_Seele} < A_2 = h / (e_1 + e_2),$$

- die Zerreißdehnung $A_{Zerreiß\_Umspinnung}$ der Umspinnung größer als das Verhältnis $A_2$ zwischen einer Formungshöhe h der Anordnung (1) und der Summe aus der Dicke $e_1$ der ersten Struktur (10) und aus der Dicke $e_2$ der zweiten Struktur (12) ist:

$$A_{Zerreiß\_Umspinnung} > A_2 = h / (e_1 + e_2).$$

5. Anordnung (1) nach einem der Ansprüche 1 bis 4, bei der eine Sekantensteifigkeit der Umspinnung (18b) des Verbindungselements (18) kleiner oder gleich einer maximalen Steifigkeit $E_{max}$ ist, die dem Verhältnis zwischen einer Kraft $F_{Umspinnung}$, die die Umspinnung (18b) des Verbindungselements (18) beim Anwenden eines vorbestimmten Bombierungsdrucks, so dass ein Raum (2) gebildet wird, der die erste Struktur (10) und die zweite Struktur (12) voneinander trennt, erfährt, und seiner Dehnung bei diesem Bombierungsdruck A entspricht:

$$E_{max} = F_{Umspinnung}/ A$$

worin: $F_{Umspinnung}$ der Kraft entspricht, die die Umspinnung (18b) des mindestens einen Verbindungselements (18) bei dem vorbestimmten Bombierungsdruck erfährt, und A der Dehnung des Verbindungselements (18) bei diesem Bombierungsdruck entspricht.

6. Anordnung (1) nach einem der Ansprüche 1 bis 5, bei der eine Sekantensteifigkeit des Verbindungselements (18) größer oder gleich einer minimalen Steifigkeit $E_{min}$ ist, die dem Verhältnis einer Kraft $F_{T\_Verstärkung}$, die das Verbindungselement (18) unter einer vorbestimmten Wickelspannung T erfährt, und der Dehnung $A_T$, die das Verbindungselement (18) unter der gleichen Wickelspannung T erfahren können muss, entspricht:

$$E_{min} = F_{T\_Verstärkung}/A_T$$

worin: $F_{T\_Verstärkung}$ der Kraft entspricht, die das Verbindungselement unter der Wickelspannung T erfährt, und $A_T$ der Dehnung entspricht, die das Verbindungselement (18) unter der gleichen Wickelspannung T erfahren können muss.

7. Herstellungsverfahren (S0) zur Herstellung einer Anordnung (1) nach einem der Ansprüche 1 bis 6, wobei das Herstellungsverfahren (S0) die folgenden Schritte umfasst:

- Anordnen (S1) der ersten Struktur (10) auf der zweiten Struktur (12), so dass die erste Achse (11) und die zweite Achse (13) im Wesentlichen parallel sind, und
- Fixieren (S3) der ersten Struktur (10) auf der zweiten Struktur (12) unter Fixierung mindestens eines Verbindungselements (18) an den ersten fadenförmigen Elementen (15) und an den zweiten fadenförmigen Elementen (16),
wobei das Herstellungsverfahren (S0) **dadurch gekennzeichnet ist, dass** das mindestens eine Verbindungselement (18) ein umsponnenes fadenförmiges Element umfasst, das eine Seele (18a) beinhaltet, um die eine Umspinnung (18b) gewickelt ist, und bei dem:

- die Seele (18a) des Verbindungselements (18) eine Zerreißdehnung $A_{Zerreiß\_Seele}$ aufweist, die geringer als das Verhältnis $A_1$ zwischen einer Formungshöhe h der Anordnung (1) und der Summe aus einer Dicke $e_1$ der ersten Struktur (10), aus einer Dicke $e_2$ der zweiten Struktur (12) und aus einer Umschlingungslänge E ist:

$$A_{Zerreiß\_Seele} < A_1 = h / (E + e_1 + e_2)$$

worin: $A_{Zerreiß\_Seele}$ die Zerreißdehnung der Seele (18a) ist h die Formungshöhe der Anordnung ist, die einer Höhe zwischen gegenüberliegenden Seiten der ersten Struktur (10) und der zweiten Struktur (12) entspricht, wenn die tragenden fadenförmigen Elemente (17) gespannt sind,

$e_1$ die Dicke der ersten Struktur (10) ist,

$e_2$ die Dicke der zweiten Struktur (12) ist,

E die Umschlingungslänge ist, die gleich der Summe aus der krummlinigen Länge E1 des Teils 21 des Abschnitts 20 des Verbindungselements 18, der in der ersten Struktur 10 umschlungen ist, und aus einer krummlinigen Länge E2 des Teils 22 des Abschnitts 20 des Verbindungselements 18, der in der zweiten Struktur 12 umschlungen ist, ist, wobei die krummlinige Länge E1 gleich der Hälfte der krummlinigen Länge des Verbindungselements 18 ist, die zwischen zwei aufeinanderfolgenden Verankerungspunkten 23 in der ersten Struktur 10 umschlungen ist, und die krummlinige Länge E2 gleich der Hälfte der krummlinigen Länge des Verbindungselements 18 ist, die zwischen zwei aufeinanderfolgenden Verankerungspunkten 24 des Verbindungselements 18 in der zweiten Struktur 12 umschlungen ist, und

- die Umspinnung (18b) des Verbindungselements (18) eine Zerreißdehnung $A_{Zerreiß\_Umspinnung}$ aufweist, die größer als eine Dehnung ist, die gleich dem Verhältnis $A_1$ zwischen der Formungshöhe h der Anordnung (1) und der Summe aus der Dicke $e_1$ der ersten Struktur (10), aus der Dicke $e_2$ der zweiten Struktur (12) und aus der Umschlingungslänge E ist:

$$A_{Zerreiß\_Umspinnung} > A_1 = h \; / \; (E + e_1 + e_2)$$

worin: $A_{Zerreiß\_Umspinnung}$ die Zerreißdehnung der Seele (18a) ist.

**8.** Herstellungsverfahren (S0) nach Anspruch 7, bei dem

- das Verbindungselement (18) eine erste Sekantensteifigkeit aufweist und die Seele (18a) eine erste Zerreißdehnung $A_{Zerreiß\_Seele}$ aufweist,
- die Umspinnung (18b) eine zweite Sekantensteifigkeit und eine zweite Zerreißdehnung $A_{Zerreiß\_Umspinnung}$ aufweist, wobei die erste Sekantensteifigkeit des Verbindungselements (18) strikt größer als die zweite Sekantensteifigkeit der Umspinnung (18b) ist, wobei die erste Zerreißdehnung $A_{Zerreiß\_Seele}$ der Seele (18a) strikt kleiner als die zweite Zerreißdehnung $A_{Zerreiß\_Umspinnung}$ der Umspinnung (18b) ist.

**9.** Herstellungsverfahren (S0) nach Anspruch 7 oder 8, bei dem das mindestens eine Verbindungselement (18) zwei entgegengesetzte freie Enden aufweist, wobei der Fixierungsschritt die Teilschritte des Verankerns des mindestens einen Verbindungselements (18) an den ersten fadenförmigen Elementen (15) und an den zweiten fadenförmigen Elementen (16) im Bereich seiner freien Enden und des Umschlingens des Verbindungselements (18) in der ersten und in der zweiten Struktur (10, 12) zwischen seinen freien Enden umfasst.

**10.** Herstellungsverfahren (S0) nach Anspruch 7 oder 8, bei dem das mindestens eine Verbindungselement (18) zwei entgegengesetzte freie Enden aufweist, wobei der Fixierungsschritt (S0) durch Verankern des mindestens einen Verbindungselements (18) an den ersten fadenförmigen Elementen (15) und an den zweiten fadenförmigen Elementen (16) im Bereich seiner freien Enden und an mehreren Stellen zwischen seinen freien Enden ausgeführt wird, wobei das Verbindungselement (18) so ausgelegt ist, dass:

- die Zerreißdehnung der Seele $A_{Zerreiß\_Seele}$ geringer als das Verhältnis $A_2$ zwischen einer Formungshöhe h der Anordnung (1) und der Summe aus der Dicke $e_1$ der ersten Struktur (10) und aus der Dicke $e_2$ der zweiten Struktur (12) ist:

$$A_{Zerreiß\_Seele} < A_2 = h \; / \; (e_1 + e_2),$$

- die Zerreißdehnung $A_{Zerreiß\_Umspinnung}$ der Umspinnung größer als das Verhältnis $A_2$ zwischen einer Formungshöhe h der Anordnung (1) und der Summe aus der Dicke $e_1$ der ersten Struktur (10) und aus der Dicke $e_2$ der zweiten Struktur (12) ist:

$$A_{Zerreiß\_Umspinnung} > A_2 = h \; / \; (e_1 + e_2).$$

**11.** Herstellungsverfahren (S0) nach einem der Ansprüche 7 bis 10, bei dem die erste Struktur (10) und die zweite Struktur (12) dazu ausgestaltet sind, durch Anwenden eines vorbestimmten Bombierungsdrucks beabstandet zu werden, so dass ein Raum (2) gebildet wird, der die erste Struktur (10) und die zweite Struktur (12) voneinander trennt, und die Umspinnung (18b) des mindestens einen Verbindungselements so ausgelegt ist, dass eine Sekantensteifigkeit der Umspinnung (18b) kleiner oder gleich einer maximalen Steifigkeit $E_{max}$ ist, die dem Verhältnis zwischen einer Kraft $F_{Umspinnung}$, die die Umspinnung (18b) des Verbindungselements (18) bei der Anwendung des vorbestimmten Bombierungsdrucks, um den Raum (2) zu bilden, erfährt, und seiner Zerreißdehnung A entspricht:

$$E_{max} = F_{Umspinnung} \ / \ A$$

worin: $F_{Umspinnung}$ der Kraft entspricht, die die Umspinnung (18b) des Verbindungselements bei dem vorbestimmten Bombierungsdruck erfährt,
A der Dehnung des Verbindungselements (18) bei diesem Bombierungsdruck entspricht.

12. Herstellungsverfahren (S0) nach einem der Ansprüche 7 bis 11, das ferner einen Schritt (S4) des Wickelns der Anordnung (1) um eine Trommel unter Anwendung einer vorbestimmten Wickelspannung T auf die Anordnung (1) umfasst und bei dem eine Sekantensteifigkeit des mindestens einen Verbindungselements (18) größer oder gleich einer minimalen Steifigkeit $E_{min}$ ist, die dem Verhältnis einer Kraft $\sigma_{T\_Verstärkung}$, die das Verbindungselement (18) unter der vorbestimmten Wickelspannung T erfährt, und der Dehnung $A_T$, die das Verbindungselement (18) unter dieser Wickelspannung T erfährt, entspricht:

$$E_{min} = F_{T\_Verstärkung} \ /A_T$$

worin: $F_{T\_Verstärkung}$ der Kraft entspricht, die das Verbindungselement unter der Wickelspannung T erfährt $A_T$ der Dehnung entspricht, die das Verbindungselement (18) unter dieser Wickelspannung T erfährt.

13. Herstellungsverfahren (S0) zur Herstellung einer Anordnung (1) nach einem der Ansprüche 7 bis 12, umfassend ferner vor dem Fixierungsschritt (S3) einen Schritt (S2), während dessen die erste Achse (11) und die zweite Achse (13) übereinander gelegt werden.

14. Herstellungsverfahren (S) zur Herstellung eines Reifens, der eine Umdrehungsachse aufweist, wobei das Verfahren die folgenden Schritte umfasst:

- Bereitstellen einer Anordnung (1) nach einem der Ansprüche 1 bis 6,

Anwenden eines Bombierungsdrucks (S5), so dass:

. ein ringförmiger Raum (2) gebildet wird, der radial durch eine Innenseite der ersten Struktur (10) und durch eine Innenseite der zweiten Struktur (12) begrenzt wird, und
. die Seele (18a) des Verbindungselements (18) zerrissen wird, ohne die Umspinnung (18b) des Verbindungselements (18) zu zerreißen.

15. Reifen (4), der eine Umdrehungsachse aufweist und umfasst:

- eine Anordnung (1) nach einem der Ansprüche 1 bis 6 und
- einen ringförmigen Raum (2), der radial durch eine Innenseite der ersten Struktur (10) und durch eine Innenseite der zweiten Struktur (12) begrenzt wird, wobei der Reifen **dadurch gekennzeichnet ist, dass** er mit einem Verfahren nach Anspruch 14 erhalten wird, so dass die Seele (18a) des Verbindungselements (18) zerrissen wird, nicht jedoch die Umspinnung (18b) des Verbindungselements.

**Claims**

1. Assembly (1) for a tyre comprising:

- a first structure (10) formed by first cord elements (15), the first structure (10) having a longitudinal edge extending in a first direction which defines a first axis (11),
- a second structure (12) formed by second cord elements (16), the second structure (12) comprising a longitudinal edge extending in a second direction which defines a second axis (13), the first axis (11) and the second axis (13) being parallel,
- a bearing structure (14) comprising bearing cord elements (17) linking the first cord elements (15) of the first structure (10) and the second cord elements (16) of the second structure (12), and
- at least one cord securing element (18) fixed to the first cord elements (15) and to the second cord elements (16), the assembly (1) being **characterized in that** the at least one securing element (18) comprises a gimped cord element comprising a core (18a) around which a gimp yarn (18b) is wound, wherein:

- the core (18a) of the securing element (18) exhibits an elongation at rupture $A_{rupture\_core}$ lower than the ratio $A_1$ between a conformation height h of the assembly (1) and the sum of a thickness $e_1$ of the first structure (10), of a thickness $e_2$ of the second structure (12) and of a lock length E:

$$A_{rupture\_core} < A_1 = h / (E + e_1 + e_2)$$

in which: $A_{rupture\_core}$ is the elongation at rupture of the core (18a),
h is the conformation height of the assembly, corresponding to a height between opposite faces of the first structure (10) and of the second structure (12) when the bearing cord elements (17) are taut,
$e_1$ is the thickness of the first structure (10),
$e_2$ is the thickness of the second structure (12),
E is the lock length, which is equal to the sum of the curvilinear length (E1) of the part (21) of the portion (20) of the securing element (18) which is locked in the first structure (10) and of a curvilinear length (E2) of the part (22) of the portion (20) of the securing element (18) which is locked in the second structure (12), where the curvilinear length (E1) is equal to half the curvilinear length of the securing element (18) which is locked between two successive anchoring points (23) in the first structure (10), and the curvilinear length (E2) is equal to half the curvilinear length of the securing element (18) which is locked between two successive anchoring points (24) of the securing element (18) in the second structure (12) and

- the gimp yarn (18b) of the securing element (18) exhibits an elongation at rupture ($A_{rupture\_gimp}$) greater than an elongation equal to said ratio $A_1$ between the conformation height (h) of the assembly (1) and the sum of the thickness $e_1$ of the first structure (10), of the thickness $e_2$ of the second structure (12) and of the lock length E:

$$A_{rupture\_gimp} > A_1 = h / (E + e_1 + e_2)$$

in which: $A_{rupture\_qimp}$ is the elongation at rupture of the core (18a).

2. Assembly (1) according to Claim 1, wherein

- the securing element (18) exhibits a first secant rigidity and the core (18a) exhibits a first elongation at rupture $A_{rupture\_core}$,
- the gimp yarn (18b) exhibits a second secant rigidity and a second elongation at rupture ($A_{rupture\_gimp}$),

the first secant rigidity of the securing element (18) being strictly greater than the second secant rigidity of the gimp yarn (18b), the first elongation at rupture $A_{rupture\_core}$ of the core (18a) being strictly lower than the second elongation at rupture $A_{rupture\_gimp}$ of the gimp yarn (18b).

3. Assembly (1) according to Claim 1 or 2, wherein the at least one securing element (18) has two opposing free ends and is anchored to the first cord elements (15) and to the second cord elements (16) at its free ends and is locked in the first structure and in the second structure (10, 12) between its free ends.

4. Assembly (1) according to Claim 1 or 2, wherein the at least one securing element (18) has two opposite free ends and is anchored to the first cord elements (15) and to the second cord elements (16) at its free ends and at several points between its free ends, and wherein:

- the elongation at rupture of the core $A_{rupture\_core}$ is lower than the ratio $A_2$ between a conformation height h of the assembly (1) and the sum of the thickness $e_1$ of the first structure (10), and of the thickness $e_2$ of the

second structure (12):

$$A_{rupture\_core} < A_2 = h / (e_1 + e_2),$$

- the elongation at rupture $A_{rupture\_gimp}$ of the gimp yarn is greater than said ratio $A_2$ between a conformation height h of the assembly (1) and the sum of the thickness $e_1$ of the first structure (10), and of the thickness $e_2$ of the second structure (12):

$$A_{rupture\_gimp} > A_2 = h / (e_1 + e_2).$$

5.  Assembly (1) according to any one of Claims 1 to 4, wherein a secant rigidity of the gimp yarn (18b) of the securing element (18) is lower than or equal to a maximum rigidity $E_{max}$ which corresponds to the ratio between a force $F_{gimp}$ undergone by the gimp yarn (18b) of the securing element (18) upon the application of a predetermined shaping pressure so as to form a space (2) separating the first structure (10) and the second structure (12) from one another, and its elongation at this shaping pressure A:

$$E_{max} = F_{gimp} / A$$

in which: $F_{gimp}$ corresponds to the force undergone by the gimp yarn (18b) of the at least one securing element (18) at the predetermined shaping pressure, and
A corresponds to the elongation of the securing element (18) at this shaping pressure.

6.  Assembly (1) according to one of Claims 1 to 5, wherein a secant rigidity of the securing element (18) is greater than or equal to a minimum rigidity $E_{min}$ which corresponds to the ratio of a force $F_{T\_reinforcement}$ undergone by the securing element (18) under a predetermined winding tension T and of the elongation $A_T$ that the securing element (18) should be capable of undergoing under this same winding tension T:

$$E_{min} = F_{T\_reinforcement}/A_T$$

in which: $F_{T\_reinforcement}$ corresponds to the force undergone by the securing element under the winding tension T, and
$A_T$ corresponds to the elongation that the securing element (18) should be capable of undergoing under this same winding tension (T).

7.  Method for manufacturing (S0) an assembly (1) according to one of Claims 1 to 6, said manufacturing method (S0) comprising the following steps:

    - placing (S1) the first structure (10) on the second structure (12) so that the first axis (11) and the second axis (13) are substantially parallel, and
    - fixing (S3) the first structure (10) onto the second structure (12) by fixing at least one securing element (18) to the first cord elements (15) and to the second cord elements (16),
    the manufacturing method (S0) being **characterized in that** the at least one securing element (18) comprises a gimped cord element comprising a core (18a) around which a gimp yarn (18b) is wound and wherein:

    - the core (18a) of the securing element (18) exhibits an elongation at rupture $A_{rupture\_core}$ lower than the ratio $A_1$ between a conformation height h of the assembly (1) and the sum of a thickness $e_1$ of the first structure (10), of a thickness $e_2$ of the second structure (12) and of a lock length E:

$$A_{rupture\_core} < A_1 = h / (E + e_1 + e_2)$$

in which: $A_{rupture\_core}$ is the elongation at rupture of the core (18a) h is the conformation height of the assembly, corresponding to a height between opposite faces of the first structure (10) and of the second structure (12) when the bearing cord elements (17) are taut,

$e_1$ is the thickness of the first structure (10),

$e_2$ is the thickness of the second structure (12),

E is the lock length, which is equal to the sum of the curvilinear length (E1) of the part (21) of the portion (20) of the securing element (18) which is locked in the first structure (10) and of a curvilinear length (E2) of the part (22) of the portion (20) of the securing element (18) which is locked in the second structure (12), where the curvilinear length (E1) is equal to half the curvilinear length of the securing element (18) which is locked between two successive anchoring points (23) in the first structure (10), and the curvilinear length (E2) is equal to half the curvilinear length of the securing element (18) which is locked between two successive anchoring points (24) of the securing element (18) in the second structure (12) and

- the gimp yarn (18b) of the securing element (18) exhibits an elongation at rupture $A_{rupture\_gimp}$ greater than an elongation equal to said ratio $A_1$ between the conformation height h of the assembly (1) and the sum of the thickness $e_1$ of the first structure (10), of the thickness $e_2$ of the second structure (12) and of the lock length E:

$$A_{rupture\_gimp} > A_1 = h / (E + e_1 + e_2).$$

in which: $A_{rupture\_gimp}$ is the elongation at rupture of the core (18a).

8. Manufacturing method (S0) according to Claim 7, wherein

- the securing element (18) exhibits a first secant rigidity and the core (18a) exhibits a first elongation at rupture $A_{rupture\_core}$,
- the gimp yarn (18b) exhibits a second secant rigidity and a second elongation at rupture $A_{rupture\_gimp}$,

the first secant rigidity of the securing element (18) being strictly greater than the second secant rigidity of the gimp yarn (18b), the first elongation at rupture $A_{rupture\_core}$ of the core (18a) being strictly lower than the second elongation at rupture $A_{rupture\_gimp}$ of the gimp yarn (18b).

9. Manufacturing method (S0) according to Claim 7 or 8, wherein the at least one securing element (18) has two opposite free ends, the fixing step comprising the substeps of anchoring said at least one securing element (18) to the first cord elements (15) and to the second cord elements (16) at its free ends and of locking said securing element (18) in the first structure and the second structure (10, 12) between its free ends.

10. Manufacturing method (S0) according to Claim 7 or 8, wherein the at least one securing element (18) has two opposite free ends, the fixing step (S0) being performed by anchoring said at least one securing element (18) to the first cord elements (15) and to the second cord elements (16) at its free ends and at several points between its free ends, the securing element (18) being dimensioned so that:

- the elongation at rupture of the core $A_{rupture\_core}$ is lower than the ratio $A_2$ between a conformation height h of the assembly (1) and the sum of the thickness $e_1$ of the first structure (10), and of the thickness $e_2$ of the second structure (12):

$$A_{rupture\_core} < A_2 = h / (e_1 + e_2),$$

- the elongation at rupture $A_{rupture\_gimp}$ of the gimp yarn is greater than said ratio $A_2$ between a conformation height h of the assembly (1) and the sum of the thickness $e_1$ of the first structure (10), and of the thickness $e_2$ of the second structure (12):

$$A_{rupture\_gimp} > A_2 = h / (e_1 + e_2).$$

11. Manufacturing method (S0) according to one of Claims 7 to 10, wherein the first structure (10) and the second structure (12) are configured to be separated by application of a predetermined shaping pressure so as to form a space (2) separating the first structure (10) and the second structure (12) from one another, and the gimp yarn (18b) of the at least one securing element is dimensioned so that a secant rigidity of said gimp yarn (18b) is lower than or equal to a maximum rigidity $E_{max}$ which corresponds to the ratio between a force $F_{gimp}$ undergone by the gimp yarn (18b) of the securing element (18) upon the application of the predetermined shaping pressure to form the space (2) and its elongation at rupture A:

$$E_{max} = F_{gimp} / A$$

in which: $F_{gimp}$ corresponds to the force undergone by the gimp yarn (18b) of the securing element at the predetermined shaping pressure,
A corresponds to the elongation of the securing element (18) at this shaping pressure.

12. Manufacturing method (S0) according to one of Claims 7 to 11, further comprising a step (S4) of winding the assembly (1) around a drum by applying a predetermined winding tension T to said assembly (1), and wherein a secant rigidity of the at least one securing element (18) is greater than or equal to a minimum rigidity $E_{min}$ which corresponds to the ratio of a force $\sigma_{T\_reinforcement}$ undergone by the securing element (18) under the predetermined winding tension T and of the elongation $A_T$ undergone by the securing element (18) under this winding tension T:

$$E_{min} = F_{T\_reinforcement}/A_T$$

in which $F_{T\_reinforcement}$ corresponds to the force undergone by the securing element under the winding tension T
$A_T$ corresponds to the elongation undergone by the securing element (18) under this winding tension T.

13. Manufacturing method (S0) for manufacturing an assembly (1) according to one of Claims 7 to 12, further comprising, prior to the fixing step (S3), a step (S2) during which the first axis (11) and the second axis (13) are superposed.

14. Method for manufacturing (S) a tyre having an axis of revolution, said method comprising the following steps:

- supplying an assembly (1) according to one of Claims 1 to 6,
- applying a shaping pressure (S5) so as to:
- form an annular space (2) delimited radially by an internal face of the first structure (10) and by an internal face of the second structure (12) and
- break the core (18a) of the securing element (18) without breaking the gimp yarn (18b) of the securing element (18).

15. Tyre (4) having an axis of revolution and comprising:

- an assembly (1) according to one of Claims 1 to 6, and
- an annular space (2) delimited radially by an internal face of the first structure (10) and by an internal face of the second structure (12), the tyre being **characterized in that** it is obtained by a method according to Claim 14 such that the core (18a) of the securing element (18) is broken, but not the gimp yarn (18b) of said securing element.

Fig. 1

Fig. 2

Fig. 3

S

| Placer la première structure sur la deuxième structure | S1 |

| Superposer le premier axe et le deuxième axe | S2 |

| Fixer la première structure sur la deuxième structure en entrelaçant un élément de solidarisation dans les premiers et deuxièmes éléments filaires | S3 |

| Enrouler l'assemblage autour d'un tambour | S4 |

S0

| Appliquer une pression de gonflage à l'assemblage | S5 |

Fig. 4a

Fig. 4b

Fig. 5

**RÉFÉRENCES CITÉES DANS LA DESCRIPTION**

**Documents brevets cités dans la description**

- WO 2017103490 A
- WO 2017103491 A